# EUROPEAN PATENT SPECIFICATION

(11) **EP 3 979 616 B1**
(45) Date of publication and mention of the grant of the patent: **29.10.2025**
(21) Application number: 20865492.1
(22) Date of filing: 16.09.2020
(51) Int. Cl.: G02B 15/173, G03B 3/02, G03B 3/04, G02B 15/14, G02B 13/00, H04N 23/55, H04N 23/67, H04N 23/57, G02B 7/10, G03B 3/10, G03B 30/00, G03B 5/00

(54) **IMAGING METHOD, IMAGING MODULE AND ELECTRONIC DEVICE**
BILDGEBUNGSVERFAHREN, BILDGEBUNGSMODUL UND ELEKTRONISCHE VORRICHTUNG
PROCÉDÉ D'IMAGERIE, MODULE D'IMAGERIE ET DISPOSITIF ÉLECTRONIQUE

(30) Priority: 18.09.2019 CN 201910883205
(43) Date of publication of application: 06.04.2022
(73) Proprietor: GUANGDONG OPPO MOBILE TELECOMMUNICATIONS CORP., LTD., Wusha, Chang'an Dongguan Guangdong 523860 (CN)
(72) Inventor: XU, Qing, Dongguan, Guangdong 523860 (CN)
(74) Representative: Taor, Simon Edward William
(86) International application number: PCT/CN2020/115471
(87) International publication number: WO 2021/052345

(56) References cited:
- CN-A- 101 288 026
- CN-A- 102 798 964
- CN-A- 102 866 484
- CN-A- 103 235 399
- CN-A- 104 570 301
- CN-A- 108 303 788
- CN-A- 109 683 296
- JP-A- 2009 217 167
- JP-A- H06 339 054
- KR-A- 20180 015 966
- US-A1- 2003 161 620
- US-A1- 2019 129 197

## Description

### CROSS-REFERENCE TO RELATED APPLICATIONS

The present application claims priority to and the benefit of Chinese Patent Application No. 201910883205.1, filed with China National Intellectual Property Administration on September 18, 2019.

### TECHNICAL FIELD

The present disclosure relates to the field of imaging technologies, and more particularly, to an imaging method, an imaging module, and an electronic device.

### BACKGROUND

Users have a need for shooting close-range scenes and shooting long-distance-range scenes, so multiple cameras, such as a telephoto camera and a normal-focal-length camera (i.e., a short focus camera, compared with the telephoto camera), can be arranged on an electronic device. The focal length of the electronic device can be changed by switching the multiple cameras to meet the needs of users for zoom shooting. JP2009217167A discloses a zoom optical system and an image pickup apparatus that are small and have a high zoom ratio suitable for a photographing optical system of a digital input/output device. JPH06339054A discloses a variable power image pickup device with high performance in which limitation on design can be considerably reduced. US20190129197A1 discloses an optical image stabilizing module and camera module including the optical image stabilizing module, which have a simple structure and a small size while implementing functions such as the AF function, the zoom function, the OIS function, and the like, and can significantly decrease power consumption. KR 20180015966A discloses an actuator for a zoom lens which can optimize image stabilization of a zoom lens.

### SUMMARY

The embodiment of the present disclosure provides an imaging method according to claim 1, an imaging module according to claim 2, and an electronic device according to claim 10.

Additional aspects and advantages of embodiments of the present disclosure will be given in part in the following descriptions, become apparent in part from the following description, or be learned from the practice of the embodiments of the present disclosure.

### BRIEF DESCRIPTION OF DRAWINGS

These and other aspects and advantages of embodiments of the present disclosure will become apparent and more readily appreciated from the following description made with reference to the accompanying drawings, in which:
FIG. 1 is a schematic structural diagram of an imaging module in a short focal length state according to some embodiments of the present disclosure;
FIG. 2 is a schematic structural diagram of an imaging module in a telephoto state according to some embodiments of the present disclosure;
FIG. 3a is a schematic diagram showing focusing of an imaging module according to some embodiments of the present disclosure;
FIG. 3b is a histogram showing a definition of an image during the focusing of the imaging module of FIG. 3a
   FIG. 4 is a schematic diagram showing an assembled imaging module according to ome embodiments of the present disclosure;
FIG. 5 is a schematic exploded diagram of an imaging module according to some embodiments of the present disclosure;
FIG. 6 is a schematic cross-sectional view of the imaging module of FIG. 4 taken along a line VI-VI;
FIG. 7 is a schematic diagram showing a lens of a zoom lens according to some embodiments of the present disclosure;
FIGS. 8-10 are flowcharts illustrating imaging methods according to some embodiments of the present disclosure; and
FIG. 11 is a schematic diagram of an electronic device according to some embodiments of the present disclosure.

### DESCRIPTION OF EMBODIMENTS

The embodiments of the present disclosure will be described in detail below, and examples of the embodiments are illustrated in the accompanying drawings, throughout which the same or similar reference numerals refer to the same or similar elements or elements having the same or similar functions. The embodiments described below with reference to the accompanying drawings are illustrative and intended to explain the present disclosure and should not be construed as limiting the present disclosure.

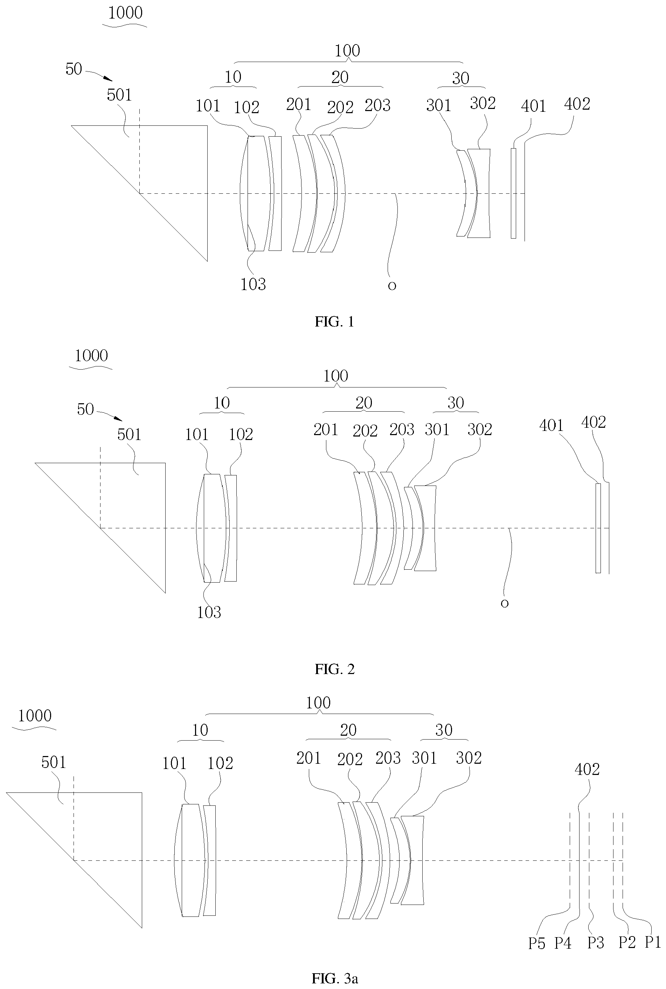

Referring to FIG. 1, FIG. 2 and FIG. 8, an imaging method according to an embodiment of the present disclosure is configured to control any one of the imaging modules 1000. The imaging module 1000 includes a zoom lens 100 and a photosensitive element 402, the zoom lens 100 includes a first lens group 10, a second lens group 20, and a third lens group 30, and the imaging method includes the following steps.

At step 02, during switching of the zoom lens 100 from a long focal length to a short focal length, a position of the first lens group 10 and a position of the third lens group 30 on an optical axis of the zoom lens 100 are controlled to be relatively fixed, and the second lens group 20 and the photosensitive element 402 are controlled to move towards an object side of the imaging module 1000 along the optical axis.

At step 03, during switching of the zoom lens 100 from the short focal length to the long focal length, the position of the first lens group10 and the position of the third lens group 30 on the optical axis are controlled to be relatively fixed, and the second lens group 20 and the photosensitive element 402 are controlled to move towards an image side of the imaging module 1000 along the optical axis.

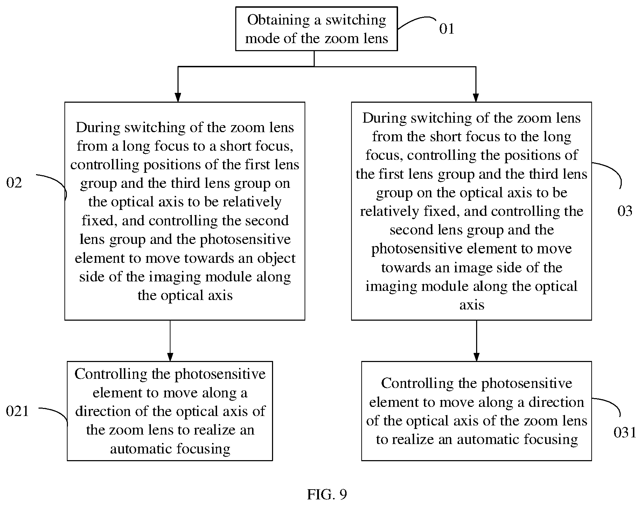

In conjunction with FIG. 9, in some embodiments, the imaging method further includes the following steps.

At step 021, after the zoom lens 100 is switched from the short focal length to the long focal length, the photosensitive element 402 is controlled to move along the optical axis of the zoom lens 100 to enable an automatic focusing.

At step 031, after the zoom lens 100 is switched from the long focal length to the short focal length, the photosensitive element 402 is controlled to move along the optical axis of the zoom lens 100 to enable an automatic focusing.

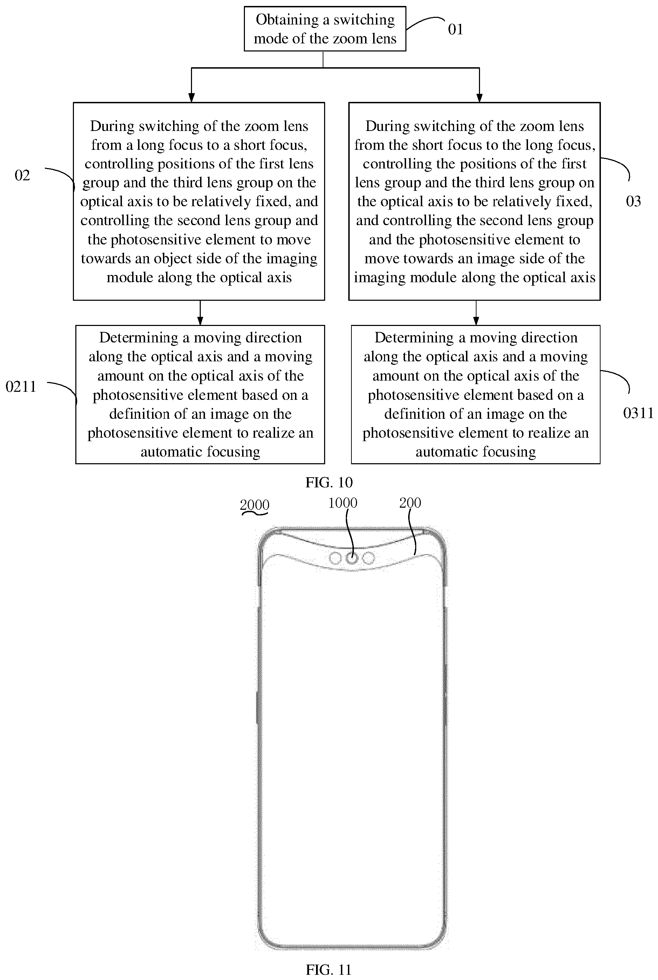

In conjunction with FIG. 10, in some embodiments, step 021 includes the following step.

At step 0211, after the zoom lens 100 is switched from the short focal length to the long focal length, a moving direction of the photosensitive element 402 along the optical axis and a moving amount of the photosensitive element 402 on the optical axis are determined based on a definition of an image on the photosensitive element 402 to enable the automatic focusing.

In conjunction with FIG. 10, in some embodiments, step 031 includes the following step.

At step 0311, after the zoom lens 100 is switched from the long focal length to the short focal length, a moving direction of the photosensitive element 402 along the optical axis and a moving amount of the photosensitive element 402 on the optical axis are determined based on a definition of an image on the photosensitive element 402 to enable the automatic focusing.

Referring to FIG. 1 and FIG. 2, the imaging module 1000 according to the embodiment of the present disclosure includes the zoom lens 100 and the photosensitive element 402. The zoom lens 100 includes the first lens group 10, the second lens group 20, and the third lens group 30. The first lens group 10, the second lens group 20, the third lens group 30, and the light-sensitive element 402 are arranged in the direction from the object side of the zoom lens 100 to the image side of the zoom lens 100 (i.e., a light incident direction of the zoom lens 100). Each of the second lens group 20 and the photosensitive element 402 is movable in the direction of the optical axis of the zoom lens 100. During switching of the zoom lens 100 from the long focal length to the short focal length, the position of the first lens group 10 and the position of the third lens group 30 on the optical axis o are relatively fixed, and the second lens group 20 and the photosensitive element 402 move towards the object side of the imaging module 1000 along the optical axis o. During switching of the zoom lens 100 from the short focal length to the long focal length, the position of the first lens group 10 and the position of the third lens group 30 on the optical axis o are relatively fixed, and the second lens group 20 and the photosensitive element 402 move towards the image side of the imaging module 1000 along the optical axis o.

Referring to FIG. 1 and FIG. 2, in some embodiments, the zoom lens 100 further includes a filter 401. The filter 401 is disposed between the photosensitive element 402 and the third lens group 30, and the filter 401 moves along with the photosensitive element 402 during switching of the zoom lens 100 between the short focal length and the long focal length and during automatic focusing.

Referring to FIG. 1 and FIG. 2, the zoom lens 100 further includes a prism assembly 50. The prism assembly 50 includes a prism 501. The prism 501, the first lens group 10, the second lens group 20, the third lens group 30, and the photosensitive element are arranged in a direction from the object side of the zoom lens 100 to the image side of the zoom lens 100.

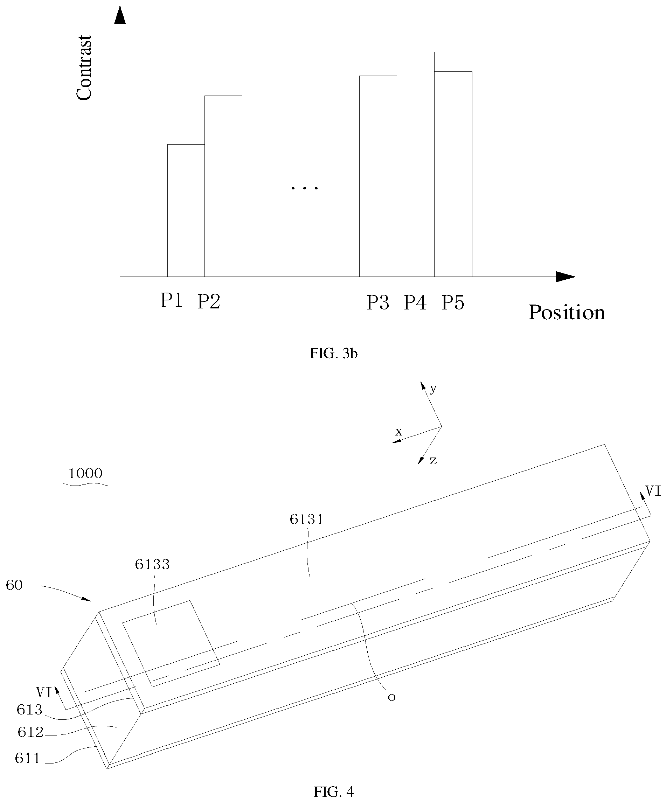

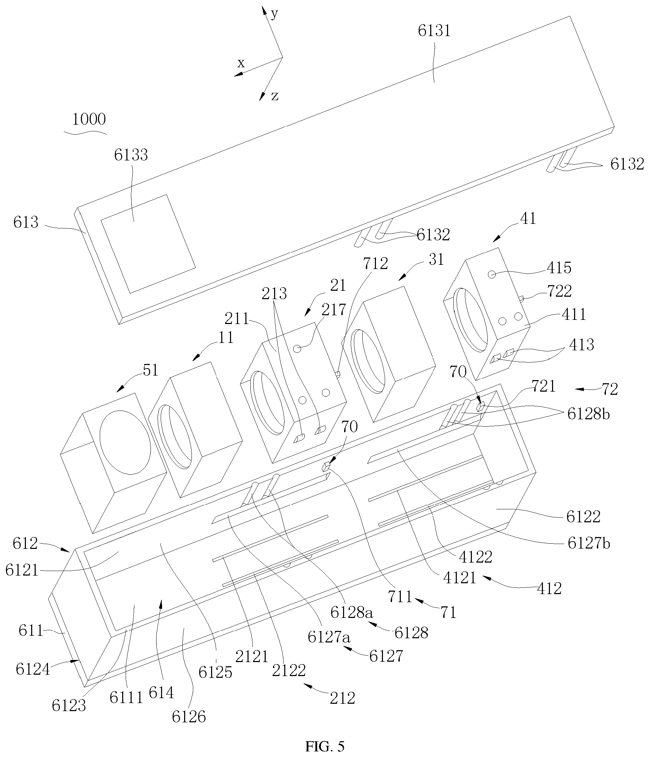

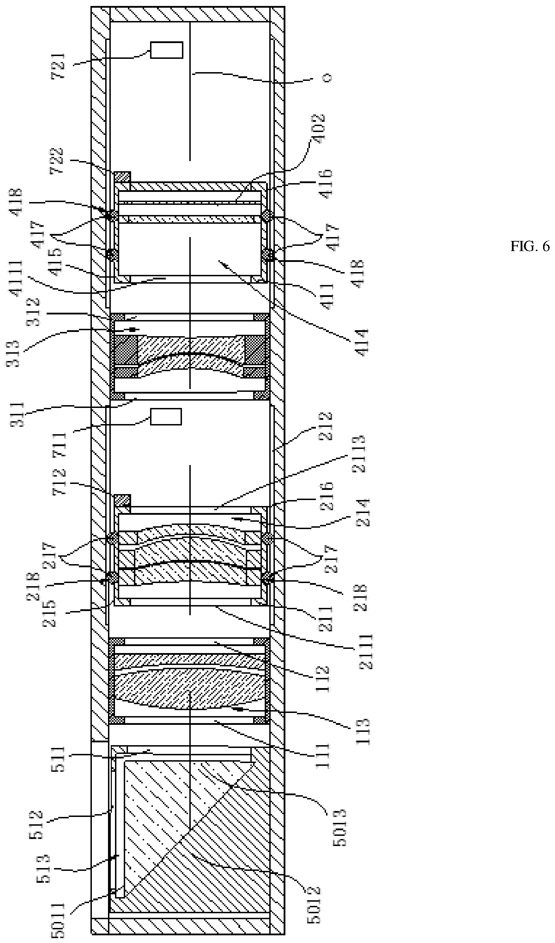

In conjunction with FIG. 4 to FIG. 6, in some embodiments, the imaging module 1000 further includes a housing 60, a movable barrel 21, and a movable frame 41. The housing 60 includes a base plate 611 and a side plate 612 arranged on the base plate 611, sliding grooves 6127 are formed in the side plate 612 and extend along the direction of the optical axis **o.** The movable barrel 21 is disposed in the housing 60, the second lens group 20 is installed on the movable barrel 21, and the movable barrel 21 includes a first body 211 and first sliding blocks 213 disposed on two sides of the first body 211. The movable frame 41 is disposed in the housing 60, the photosensitive element 402 is arranged on the movable frame 41, and the movable frame 41 includes a second body 411 and second sliding blocks 413 disposed on two sides of the second body 411. The first sliding blocks 213 and the second sliding blocks 413 are movably installed in the sliding grooves 6127; when the first body 211 moves, the second lens group 20 is driven to move along the optical axis **o**; and when the second body 411 moves, the photosensitive element 402 is driven to move along the optical axis o.

In conjunction with FIGS. 4 to 6, in some embodiments, the movable barrel 41 includes a first ball 217, and the first ball 217 is arranged on a first bottom surface 216 of the first body 211 facing towards the base plate 611. The movable frame 41 includes a second ball 417 arranged on a second bottom surface 416 of the second body 411 facing towards the base plate 611.

In conjunction with FIG. 4 to FIG. 6, in some embodiments, the imaging module 1000 further includes a driving part 70 disposed in the housing 60. The driving part 70 is connected to the first body 211, the driving part 70 is connected to the second body 411, and the driving part 70 is configured to drive the first body 211 to move so as to drive the second lens group 20 to move along the optical axis o, and/or drive the second body 411 to move so as to drive the photosensitive element 402 to move along the optical axis o.

Referring to FIG. 1, in some embodiments, the first lens group 10 includes one or more lenses, the second lens group 20 includes one or more lenses, the third lens group 30 includes one or more lenses, and at least one lens is shaped as a portion of a revolving body.

Referring to FIG. 1, in some embodiments, the first lens group 10 includes a first lens 101 and a second lens 102, the second lens group 20 includes a third lens 201, a fourth lens 202, and a fifth lens 203, and the third lens group 30 includes a sixth lens 301 and a seventh lens 302; and respective lenses of the first lens group, the second lens group, and the third lens group satisfy following relations: -4 < f2/f1 < 0; 2 < f3/f1 < 5; 0 < f4/f1 < 4; -5 < f5/fl < -1; 0 < f6/f1 < 4; and -2 < f7/f1 < 0 or 0 < f7/f1 < 2, where f1 represents a focal length of the first lens 101, f2 represents a focal length of the second lens 102, f3 represents a focal length of the third lens 201, f4 represents a focal length of the fourth lens 202, f5 represents a focal length of the fifth lens 203, f6 represents a focal length of the sixth lens 301, and f7 represents a focal length of the seventh lens 302.

Referring to FIGS. 1, 2 and 11, an electronic device 2000 according to an embodiment of the present disclosure includes an imaging module 1000 and a casing 200. The imaging module 1000 is mounted on the casing 200. The imaging module 1000 includes a zoom lens 100 and a photosensitive element 402. The zoom lens 100 includes a first lens group 10, a second lens group 20, and a third lens group 30. The first lens group 10, the second lens group 20, the third lens group 30, and the light-sensitive element 402 are arranged in a direction from an object side of the zoom lens 100 to an image side of the zoom lens 100 (i.e., a light incident direction of the zoom lens 100). Each of the second lens group 20 and the photosensitive element 402 is movable in a direction of an optical axis of the zoom lens 100. During switching of the zoom lens 100 from a long focal length to a short focal length, a position of the first lens group 10 and a position of the third lens group 30 on the optical axis o are relatively fixed, and the second lens group 20 and the photosensitive element 402 move towards an object side of the imaging module 1000 along the optical axis **o.** During switching of the zoom lens 100 from the short focal length to the long focal length, the position of the first lens group 10 and the position of the third lens group 30 on the optical axis o are relatively fixed, and the second lens group 20 and the photosensitive element 402 move towards an image side of the imaging module 1000 along the optical axis o.

Referring to FIG. 1 and FIG. 2, in some embodiments, the zoom lens 100 further includes a filter 401 disposed between the photosensitive element 402 and the third lens group 30, and the filter 401 moves along with the photosensitive element 402 during switching of the zoom lens 100 between the short focal length and the long focal length and during an automatic focusing.

Referring to FIG. 1 and FIG. 2, the zoom lens 100 further includes a prism assembly 50, and the prism assembly 50 includes a prism 501. The prism 501, the first lens group 10, the second lens group 20, the third lens group 30, and the photosensitive element are arranged in a direction from the object side of the zoom lens 100 to the image side of the zoom lens 100.

Referring to FIG. 4 to FIG. 6, in some embodiments, the imaging module 1000 further includes a housing 60, a movable barrel 21, and a movable frame 41. The housing 60 includes a base plate 611 and a side plate 612 arranged on the base plate 611, and sliding grooves 6127 are formed on the side plate 612 and extend along the direction of the optical axis **o.** The movable barrel 21 is disposed in the housing 60, the second lens group 20 is arranged on the movable barrel 21, and the movable barrel 21 includes a first body 211 and first sliding blocks 213 arranged on two sides of the first body 211; the movable frame 41 is disposed in the housing 60, the photosensitive element 402 is arranged on the movable frame 41, and the movable frame 41 includes a second body 411 and second sliding blocks 413 arranged on two sides of the second body 411. The first sliding blocks 213 and the second sliding blocks 413 are movably installed in the sliding grooves 6127; and the first body 211, when moving, drives the second lens group 20 to move along the optical axis o, and the second body 411, when moving, drives the photosensitive element 402 to move along the optical axis o.

Referring to FIG. 4 to FIG. 6, in some embodiments, the movable barrel 41 includes a first ball 217 arranged on a first bottom surface 216 of the first body 211 facing towards the base plate 611; and the movable frame 41 includes a second ball 417 arranged on a second bottom surface 416 of the second body 411 facing towards the base plate 611.

Referring to FIG. 4 to FIG. 6, in some embodiments, the imaging module 1000 further includes a driving part 70 disposed in the housing 60. The driving part 70 is connected to the first body 211, the driving part 70 is further connected to the second body 411, and the driving part 70 is configured to drive the first body 211 to move so as to drive the second lens group 20 to move along the optical axis **o,** and/or drive the second body 411 to move so as to drive the photosensitive element 402 to move along the optical axis **o.**

Referring to FIG. 1, in some embodiments, the first lens group 10 includes one or more lenses, the second lens group 20 includes one or more lenses, the third lens group 30 includes one or more lenses, and at least one lens in the first lens group, the second lens group, and the third lens group is shaped as a part of a revolving body.

Referring to FIG. 1, in some embodiments, the first lens group 10 includes a first lens 101 and a second lens 102, the second lens group 20 includes a third lens 201, a fourth lens 202, and a fifth lens 203, and the third lens group 30 includes a sixth lens 301 and a seventh lens 302; respective lenses of first lens group, the second lens group, and the third lens group satisfy the following relations: -4 < f2/f1 < 0; 2 < f3/f1 < 5; 0 < f4/f1 < 4; -5 < f5/fl < -1; 0 < f6/f1 < 4; and -2 < f7/f1 < 0, or 0 < f7/f1 < 2, where f1 represents a focal length of the first lens 101, f2 represents a focal length of the second lens 102, f3 represents a focal length of the third lens 201, f4 represents a focal length of the fourth lens 202, f5 represents a focal length of the fifth lens 203, f6 represents a focal length of the sixth lens 301, and f7 is a focal length of the seventh lens 302.

Referring to FIG. 1 and FIG. 2, the imaging module 1000 according to an embodiment of the present disclosure includes the zoom lens 100 and the photosensitive element 402. The zoom lens 100 includes the first lens group 10, the second lens group 20, and the third lens group 30. The first lens group 10, the second lens group 20, the third lens group 30, and the light-sensitive element 402 are arranged in the direction from the object side of the zoom lens 100 to the image side of the zoom lens 100 (i.e., the light incident direction of the zoom lens 100). Each of the second lens group 20 and the photosensitive element 402 is movable in the direction of the optical axis of the zoom lens 100. During switching of the zoom lens 100 from the long focal length to the short focal length, the position of the first lens group 10 and the position of the third lens group 30 on the optical axis o are relatively fixed, and the second lens group 20 and the photosensitive element 402 move towards the object side of the imaging module 1000 along the optical axis **o.** During switching of the zoom lens 100 from the short focal length to the long focal length, the position of the first lens group 10 and the position of the third lens group 30 on the optical axis o are relatively fixed, and the second lens group 20 and the photosensitive element 402 move towards the image side of the imaging module 1000 along the optical axis **o.**

The imaging module 1000 according to the embodiment of the present disclosure enables the focal length of the imaging module 1000 to be variable by moving the second lens group 20 and the photosensitive element 402, and an optical zooming can be realized without installing a plurality of cameras in the electronic device 2000 (shown in FIG. 11), which reduces the space occupied by the cameras and saves the costs while improving the imaging quality, compared with a high-cost electronic device provided with a plurality of cameras occupying space of the electronic device.

In some embodiments, the first lens group 10 may include one or more lenses, the second lens group 20 may include one or more lenses, and the third lens group 30 may include one or more lenses. For example, the first lens group 10 includes two lenses, a first lens 101 and a second lens 102; the second lens group 20 includes three lenses, a third lens 201, a fourth lens 202, and a fifth lens 203; and the third lens group 30 includes two lenses, a sixth lens 301 and a seventh lens 302. Each of the lenses has a corresponding focal length, and in order to ensure a miniaturization of the imaging module 1000, respective lenses can satisfy the following relations: -4 < f2/f1 < 0; 2 < f3/fl < 5; 0 < f4/f1 < 4; -5 < f5/f1 < -1; 0 < f6/fl < 4; and -2 < f7/f1 < 0, or 0 < f7/f1 < 2, f1 represents the focal length of the first lens 101, f2 represents the focal length of the second lens 102, f3 represents the focal length of the third lens 201, f4 represents the focal length of the fourth lens 202, f5 represents the focal length of the fifth lens 203, f6 represents the focal length of the sixth lens 301, and f7 represents the focal length of the seventh lens 302. When the respective lenses satisfy the above relations, it is advantageous for miniaturization of the imaging module 1000. The first lens 101, the second lens 102, the third lens 201, the fourth lens 202, the fifth lens 203, the sixth lens 301, and the seventh lens 302 may all be glass lenses or all plastic lenses, or may be partially glass lenses and partially plastic lenses.

In some embodiments, during switching of the zoom lens 100 between the short focal length and the long focal length, the second lens group 20 and the photosensitive element 402 can move simultaneously towards the object side or the image side of the imaging module 1000 along the optical axis o. That is, during switching of the zoom lens 100 from the long focal length to the short focal length, the second lens group 20 and the photosensitive element 402 may move simultaneously towards the object side of the imaging module 1000 along the optical axis **o.** During switching of the zoom lens 100 from the short focal length to the long focal length, the second lens group 20 and the photosensitive element 402 may move simultaneously towards the image side of the imaging module 1000.

According to the invention, during switching of the zoom lens 100 between the short focal length and the long focal length, the second lens group 20 and the photosensitive element 402 can move synchronously along the optical axis o towards the object side or the image side of the imaging module 1000. That is, During switching of the zoom lens 100 from the long focal length to the short focal length, the second lens group 20 and the light receiving element 402 move synchronously towards the object side of the imaging module 1000; and during switching of the zoom lens 100 from the short focal length to the long focal length, the second lens group 20 and the photosensitive element 402 move synchronously towards the image side of the imaging module 1000. It should be noted that "synchronously" is interpreted that a relative spacing between the second lens group 20 and the photosensitive element 402 is unchanged during movement of the second lens group 20 and the photosensitive element 402, i.e., the direction and amount of movement of the second lens group 20 are the same as those of the photosensitive element 402. In other embodiments, during the movement, a moving direction of the second lens group 20 is the same as a moving direction of the photosensitive element 402, and the moving amount of the second lens group 20 may be different from the moving amount of the photosensitive element 402.

In some embodiments not being part of the invention, during switching of the zoom lens 100 between the short focal length and the long focal length, the second lens group 20 and the photosensitive element 402 may move successively towards the object side or the image side of the imaging module 1000 along the optical axis. That is, during switching of the zoom lens 100 from the long focal length to the short focal length, the second lens group 20 may move first towards the object side of the imaging module 1000, and then the photosensitive element 402 also moves towards the object side of the imaging module 1000; alternatively, the photosensitive element 402 moves first towards the object side of the image module 1000, and then the second lens group 20 also moves towards the object side of the image module 1000. During switching of the zoom lens 100 from the short focal length to the long focal length, the second lens group 20 may move first towards the image side of the imaging module 1000, and then the photosensitive element 402 also moves towards the image side of the imaging module 1000; alternatively, the photosensitive element 402 moves first towards the image side of the image module 1000, and then the second lens group 20 also moves towards the image side of the image module 1000.

It should be noted that the photosensitive element 402 may be a Complementary Metal Oxide Semiconductor (CMOS) photosensitive element 402 or a Charge-coupled Device (CCD) photosensitive element 402. The photosensitive element 402 can convert an optical signal of the zoom lens 100 into an electrical signal to obtain a corresponding image.

In the imaging module 1000 according to the embodiment of the present disclosure, after switching of the zoom lens 100 between the short focal length and the long focal length is completed, the photosensitive element 402 moves along the optical axis o to realize the automatic focusing. During the automatic focusing, the moving direction on the optical axis o and the moving amount on the optical axis o of the photosensitive element 402 are determined based on a definition of an image obtained by the photosensitive element 402. It should be noted that the definition may be a contrast value obtained by processing the image on the photosensitive element 402. That is to say, whether the image is clear or not can be represented by a magnitude of the contrast value, specifically, the greater the contrast value, the higher the definition of the image.

Specifically, in a process of automatic focusing, a contrast detection algorithm is adopted to implement the automatic focusing, and the photosensitive element 402 can move along the optical axis o at a fixed step length. For example, as shown in FIGS. 3a and 3b, the ordinate of the histogram in FIG. 3b represents the magnitude of the contrast value at that position, the photosensitive element 402, each time when arriving at one position, acquires one image, and the image will produce a corresponding contrast value. After the switching of the zoom lens 100 between the short focal length and the long focal length is completed, the zoom lens 100 starts automatic focusing, the first lens group 10, the second lens group 20, and the third lens group 30 are all kept relatively fixed on the optical axis o; an initial position of the photosensitive element 402 is a first position P1, and correspondingly, a first image acquired by the photosensitive element 402 has a first contrast value corresponding to a first definition of the first image; if the photosensitive element 402 moves by one step length toward the object side of the zoom lens 100 to reach a second position P2, the photosensitive element 402 acquires a second image having a second contrast value corresponding to a second definition of the second image; and a magnitude relation between the first definition and the second definition is obtained by comparing the magnitude of the first contrast value and the magnitude of the second contrast value. If the first contrast value is smaller than the second contrast value, the first definition is smaller than the second definition, that is, the definition of the second image acquired by the photosensitive element 402 at the second position P2 is higher than the definition of the first image acquired by the photosensitive element 402 at the first position P1, then the photosensitive element 402 continues to move towards the object side of the zoom lens 100 and reaches a third position P3, the photosensitive element 402 acquires a third image having a third contrast value, and the third contrast value corresponds to a third definition of the third image; a magnitude relation between the third definition and the second definition is acquired by comparing the magnitude of the second contrast value and the magnitude of the third contrast value; if the second contrast value is smaller than the third contrast value, then the second definition is smaller than the third definition, that is, the definition of the third image acquired by the photosensitive element 402 at the third position P3 is higher than the definition of the second image acquired by the photosensitive element 402 at the second position P2, and then the photosensitive element 402 continues to move by one step length towards the object side of the zoom lens 100 and reaches a fourth position P4, the photosensitive element 402 acquires a fourth image having a fourth contrast value corresponding to a fourth definition of the fourth image, and a magnitude relation between the fourth definition and the third definition is obtained by comparing the magnitude of the third contrast value and the magnitude of the fourth contrast value; if the third contrast value is smaller than the fourth contrast value, then the fourth definition is greater than the third definition, that is, the definition of the fourth image obtained by the photosensitive element 402 at the fourth position P4 is higher than the definition of the third image obtained by the photosensitive element 402 at the third position P3, and then the photosensitive element 402 continues to move by one step length towards the object side of the zoom lens 100 and reaches a fifth position P5, the photosensitive element 402 acquires a fifth image having a fifth contrast value corresponding to a fifth definition of the fifth image, a magnitude relation between the fifth definition and the fourth definition is obtained by comparing the magnitude of the fifth contrast value and the magnitude of the fourth contrast value, and it can be seen from the histogram that the fifth contrast value is smaller than the fourth contrast value, and thus the fifth definition is smaller than the fourth definition, that is, the definition of the fifth image acquired by the photosensitive element 402 at the fifth position P5 is lower than the definition of the fourth image acquired by the photosensitive element 402 at the fourth position P4, then the photosensitive element 402 returns to the fourth position P4, and the focusing is completed. Of course, the photosensitive element 402 may alternatively move towards the image side of the zoom lens 100 first, and the focusing manner is similar, which will not be elaborated here. The focusing is completed by adjusting the position of the photosensitive element 402 step by step and correspondingly detecting the contrast of the image captured by the photosensitive element 402 until the image captured by the photosensitive element 402 has a maximum contrast. During a process of imaging, compared with focusing by moving at least one of the first lens group 10, the second lens group 20, or the third lens group 30, the photosensitive element 402 has a less sensitivity to decentering than the first lens group 10, the second lens group 20, or the third lens group 30, and the focusing of the zoom lens 100 by moving the photosensitive element 402 has a higher accuracy.

In some embodiments, the zoom lens 100 may further include a prism assembly 50, the prism assembly 50 includes a prism 501, and the prism 501, the first lens group 10, the second lens group 20, the third lens group 30, and the photosensitive element 402 are arranged in a direction from the object side of the zoom lens 100 to the image side of the zoom lens 100. The prism 501 is configured to change an incident direction of the incident light of the zoom lens 100 to realize a periscopic structure of the zoom lens 100, so that the imaging module 1000 can be transversely installed on the electronic device 2000 (shown in FIG. 11), and occupies a width dimension of the electronic device 2000 as far as possible, while reducing an occupied thickness dimension of the electronic device 2000, thereby meeting light and thin requirements of users on the electronic device 2000.

In some embodiments, the zoom lens 100 may further include a filter 401, the filter 401 is disposed between the photosensitive element 402 and the third lens group 30, and during switching of the zoom lens 100 between the short focal length and the long focal length and during the automatic focusing, the filter 401 moves along with the photosensitive element 402. The filter 401 may be an IR pass filter or an IR cut-off filter or others, and different types of filters may be used according to actual applications. For example, when the imaging module 1000 adopts an IR pass filter, only the infrared ray is allowed to pass through the filter 401 to the photosensitive element 402, and the image acquired by the imaging module 1000 is an infrared image, which may be used for iris recognition, or used as a structured light image for structured light distance measurement for acquiring depth information, or used together with a visible light image for 3D modeling, or used for binocular distance measurement, etc. When the imaging module 1000 employs an IR cut-off filter, the infrared ray is not allowed to pass through the filter 401, but visible light is allowed to pass through the filter 401 to reach the photosensitive element 402, and the image acquired by the imaging module 1000 is a visible light image, which can be used for a general shooting requirement.

In some embodiments, the zoom lens 100 may further include an aperture 103, and the aperture 103 may be disposed on the first lens group 10. Specifically, the aperture 103 may be disposed on a side of the first lens 101 facing towards the prism 501. The aperture 103 together with the first lens group 10 may be held fixed on the optical axis o during switching of the zoom lens 100 between the short focal length and the long focal length and during the automatic focusing of the zoom lens 100. The prism 501, the first lens group 10 (together with the aperture 103), the second lens group 20, the third lens group 30, the filter 401, and the photosensitive element 402 are arranged in the direction from the object side of the zoom lens 100 to the image side of the zoom lens 100.

Referring to FIG. 1 and FIGS. 4 to 6, the imaging module 1000 according to the embodiment of the present disclosure may further include a housing 60, a prism barrel 51, a fixed barrel 11, a movable barrel 21, a mounting barrel 31, and a movable frame 41. The prism barrel 51, the fixed barrel 11, the movable barrel 21, the mounting barrel 31, and the movable frame 41 are all received in the housing 60. The prism assembly 50 is mounted in the prism barrel 51. The first lens group 10 together with the aperture 103 is mounted on the fixed barrel 11. The second lens group 20 is mounted in the movable barrel 21. The third lens group 30 is mounted in the mounting barrel 31. The filter 401 and the photosensitive element 402 are mounted in the movable frame 41.

During switching of the zoom lens 100 between the short focal length and the long focal length, the positions of the prism barrel 51, the fixed barrel 11, and the mounting barrel 31 on the optical axis o of the zoom lens 100 are all kept unchanged, so that the positions of the prism assembly 50, the first lens group 10, and the third lens group 30 on the optical axis o of the zoom lens 100 are also kept unchanged. When zooming of the zoom lens 100 is completed (i.e. after switching between the short focal length and the long focal length is completed), and during the automatic focusing of the zoom lens 100, the positions of the prism barrel 51, the fixed barrel 11, and the mounting barrel 31 on the optical axis o of the zoom lens 100 still remain fixed, so that the positions of the prism assembly 50, the first lens group 10, and the third lens group 30 on the optical axis o of the zoom lens 100 also remain fixed.

During switching of the zoom lens 100 between the short focal length and the long focal length, the movable barrel 21 and the movable frame 41 can both move along the optical axis **o** of the zoom lens 100, so as to drive the second lens group 20, the filter 401, and the photosensitive element 402 to also move along the optical axis **o** of the zoom lens 100. Specifically, during switching of the zoom lens 100 from the long focal length to the short focal length, the movable barrel 21 moves towards the object side of the imaging module 1000 along the optical axis **o** of the zoom lens 100, so as to drive the second lens group 20 to move towards the object side of the imaging module 1000. During switching of the zoom lens 100 from the long focal length to the short focal length, the movable frame 41 moves towards the object side of the imaging module 1000 along the optical axis **o** of the zoom lens 100, so as to drive the filter 401 and the photosensitive element 402 to move together towards the object side of the imaging module 1000. During switching of the zoom lens 100 from the short focal length to the long focal length, the movable barrel 21 moves towards the image side of the imaging module 1000 along the optical axis o of the zoom lens 100, so as to drive the second lens group 20 to move towards the image side of the imaging module 1000. During switching of the zoom lens 100 from the short focal length to the long focal length, the movable frame 41 moves towards the image side of the imaging module 1000 along the optical axis o of the zoom lens 100, so as to drive the filter 401 and the photosensitive element 402 to move together towards the image side of the imaging module 1000.

When zooming of the zoom lens 100 is completed (i.e., after completing the switching between the short focal length and the long focal length), and during the automatic focusing of the zoom lens 100, the position of the movable barrel 21 on the optical axis o of the zoom lens 100 is kept unchanged, so that the position of the second lens group 20 on the optical axis **o** of the zoom lens 100 is also kept unchanged. The movable frame 41 moves along the optical axis **o** of the zoom lens 100, so as to drive the filter 401 and the photosensitive element 402 to move together along the optical axis o of the zoom lens 100, and the moving direction and the moving amount thereof are determined by the aforementioned contrast detection algorithm, which will not be elaborated here.

The housing 60 includes a base plate 611, a side plate 612, and a cover plate 613. The base plate 611, the side plate 612, and the cover plate 613 define a receiving space 614. The prism barrel 51, the fixed barrel 11, the movable barrel 21, the mounting barrel 31, and the movable frame 41 are all disposed in the receiving space 614.

In the imaging module 1000 according to the embodiment of the present disclosure, the zoom lens 1000 is installed in the housing 60, so that the housing 60 can protect the zoom lens while the zoom lens 100 achieves zooming and/or focusing.

For convenience of subsequent description, the optical axis of the zoom lens 100 is denoted by o, a direction parallel to the optical axis **o** is defined as an x direction, and two directions perpendicular to the x direction are defined as a y direction and a z direction, respectively, i.e., any two of the x direction, the y direction, and the z direction are perpendicular to each other.

The base plate 611 includes a bearing surface 6111. The bearing surface 6111 is configured to carry the side plate 612, the zoom lens 100, the filter 401 and the photosensitive element 402. The base plate 611 may have a cuboid structure, a cube structure, a cylinder structure, or a structure with other shapes, which is not limited herein. In an embodiment of the present disclosure, the base plate 611 is a cuboid structure.

A movable barrel sliding rail 212 and a movable frame sliding rail 412 are defined on the bearing surface 6111. Extending directions of the movable barrel sliding rail 212 and the movable frame sliding rail 412 are parallel to the direction of the optical axis **o** of the zoom lens 100, i.e., parallel to the x direction. One or more movable barrel sliding rail 212 and one or more movable frame sliding rail 412 may be defined, for example, one, two, three, four, or even more movable barrel sliding rails 212 may be defined, and one, two, three, four, or even more movable frame sliding rails 412 may be defined. In the present embodiment, the number of the movable barrel sliding rails 212 is two, and the number of the movable frame sliding rails 412 is two. The two movable barrel sliding rails 212 have the same length, and the two movable frame sliding rails 412 have the same length. The length of the two movable barrel sliding rails 212 may be the same as or different from the length of the two movable frame sliding rails 412. A distance between the movable barrel sliding rail 212 and the movable frame sliding rail 412 may be greater than or equal to a length of the mounting barrel 31 in the x direction.

The side plate 612 is disposed around an edge of the base plate 611. The side plate 612 is perpendicular to the bearing surface 6111 of the base plate 611. The side plate 612 may be glued, screwed, or snapped on the base plate 611 or disposed on the base plate 611 in other manners. The side plate 612 and the base plate 611 may be integrally formed into one piece.

The side plate 612 includes an inner side surface 6121, an outer side surface 6122, an upper surface 6123, and a lower surface 6124. The inner side surface 6121 faces away from the outer side surface 6122, the inner side surface 6121 is located in the receiving space 614, the outer side surface 6122 is located outside the receiving space 614, the inner side surface 6121 is connected to the upper surface 6123 and the lower surface 6124, and the outer side surface 6122 is also connected to the upper surface 6123 and the lower surface 6124. The upper surface 6123 faces away from the lower surface 6124. The lower surface 6124 is coupled to the bearing surface 6111 of the base plate 611, and the upper surface 6123 faces away from the bearing surface 6111 of the base plate 611.

The side plate 612 includes a first side plate 6125 and a second side plate 6126 that are parallel to the x direction. The first side plate 6125 and the second side plate 6126 face each other. A sliding groove 6127 and a mounting groove 6128 are defined on an inner side surface 6121 of the first side plate 6125 and/or an inner side surface 6121 of the second side plate 6126. For example, the sliding groove 6127 and mounting groove 6128 are formed on the inner side surface 6121 of first side plate 6125, or the sliding groove 6127 and the mounting groove 6128 are formed on the inner side surface 6121 of the second side plate 6126, or the sliding groove 6127 and the mounting groove 6128 are defined on both the inner side surface 6121 of the first side plate 6125 and the inner side surface 6121 of the second side plate 6126. In the present embodiment, the sliding groove 6127 and the mounting groove 6128 are defined on both the inner side surface 6121 of the first side plate 6125 and the inner side surface 6121 of the second side plate 6126, and an extending direction of the sliding groove 6127 is parallel to the bearing surface 6111.

The sliding groove 6127 is in communication with the receiving space 614, the extending direction of the sliding groove 6127 is also parallel to the x direction, and a groove depth of the sliding groove 6127 is smaller than a thickness of the side plate 612, that is, the sliding groove 6127 does not penetrate through the outer side surface 6122 of the side plate 612. In other embodiments, the sliding groove 6127 may penetrate through the outer side surface 6122 of the side plate 612, so that the receiving space 614 is in communication with the outside. The number of sliding grooves 6127 defined on the inner side surface 6121 of the first side plate 6125 and the number of sliding grooves 6127 defined on the inner side surface 6121 of the second side plate 6126 each can be one or more. For example, the inner side surface 6121 of the first side plate 6125 has one sliding groove 6127 defined thereon, and the inner side surface 6121 of the second side plate 6126 has one sliding groove 6127 defined thereon; for another example, the inner side surface 6121 of the first side plate 6125 has two sliding grooves 6127 defined thereon, and the inner side surface 6121 of the second side plate 6126 has two sliding grooves 6127 defined thereon; for another example, the inner side surface 6121 of the first side plate 6125 has one sliding groove 6127 defined thereon, and the inner side surface 6121 of the second side plate 6126 has two sliding grooves 6127 defined thereon, and so on, which are not listed one by one. In the present embodiment, two sliding grooves 6127 and four mounting grooves 6128 are defined on each of the inner side surface 6121 of the first side plate 6125 and the inner side surface 6121 of the second side plate 6126. A cross section of the sliding groove 6127 cut by a plane perpendicular to the x direction is rectangular, semicircular, or in other shapes such as other regular shapes or irregular special shapes.

The two sliding grooves 6127 on the inner side surface 6121 of the first side plate 6125 or the inner side surface 6121 of the second side plate 6126 are a movable barrel sliding groove 6127a and a movable frame sliding groove 6127b, respectively, and the four mounting grooves 6128 on the inner side surface 6121 of the first side plate 6125 or the inner side surface 6121 of the second side plate 6126 may include two movable barrel mounting grooves 6128a and two movable frame mounting grooves 6128b. The extending directions of the movable barrel sliding groove 6127a and the movable frame sliding groove 6127b are the same as the x direction. The movable barrel mounting grooves 6128a and the movable frame mounting grooves 6128b are in communication with the receiving space 614, one end of the movable barrel mounting groove 6128a penetrates through the upper surface 6123 of the side plate 612, the other end of the movable barrel mounting groove 6128a is connected to the movable barrel sliding groove 6127a, and the extending direction of the movable barrel mounting groove 6128a can be perpendicular to or inclined relative to the extending direction of the movable barrel sliding groove 6127a; one end of the movable frame mounting groove 6128b penetrates through the upper surface 6123 of the side plate 612, the other end of the movable frame mounting groove 6128b is connected to the movable frame sliding groove 6127b, and the extending direction of the movable frame mounting groove 6128b can be perpendicular to or inclined relative to the extending direction of the movable frame sliding groove 6127b. Taking the movable barrel mounting groove 6128a as an example, the extending direction of the movable barrel mounting groove 6128a is perpendicular to the direction of the optical axis of the zoom lens 100, or the extending direction of the movable barrel mounting groove 6128a is inclined by a certain inclination angle (which is not 0 degrees, but may be 30 degrees, 60 degrees, or 75 degrees, etc.) relative to the direction of the optical axis of the zoom lens 100. In the present embodiment, the extending direction of the movable barrel mounting groove 6128a is perpendicular to the x direction, and the extending direction of the movable frame mounting groove 6128b is also perpendicular to the x direction.

The cover plate 613 is disposed on the side plate 612, and specifically, the cover plate 613 can be mounted on the upper surface 6123 of the side plate 612 by means of snapping, screwing, gluing, or other manners. The cover plate 613 includes a cover plate body 6131 and support portions 6132. A light inlet 6133 is defined in the surface of the cover plate body 6131 facing away from the side plate 612, and a depth direction of the light inlet 6133 can be perpendicular to the x direction, so that the whole imaging module 1000 is of a periscopic structure.

The support portions 6132 are disposed on two sides of the cover plate body 6131. Specifically, the support portions 6132 are located on two sides of the cover plate body 6131 that face towards the first side plate 6125 and the second side plate 6126, respectively. When the cover plate 613 is mounted on the side plate 612, the support portions 6132 are located in the mounting grooves 6128, and a length of the support portions 6132 along the z direction is equal to a depth of the mounting grooves 6128 along the z direction. Alternatively, the support portions 6132 are positioned in the mounting grooves 6128 and occupy part of the space of the mounting grooves 6128. Alternatively, the support portions 6132 are located in the mounting grooves 6128 and completely fill the mounting grooves 6128, and in this case, the support portions 6132 are coupled with the mounting grooves 6128 more firmly, so that the connection between the cover plate 613 and the side plate 612 is firmer. In other embodiments, the light inlet 6133 is not limited to an opening structure, and can be a light-transmissive solid structure through which light can enter the receiving space 614 and enter the prism assembly 50.

The movable barrel 21 includes a first body 211 and first sliding blocks 213 disposed on two sides of the first body 211. The first body 211 has a first light inlet 2111 and a first light outlet 2113 defined therein, the first light inlet 2111 and a first light outlet 2113 face towards the second lens group 20, the first body 211 has a first accommodating space 214 formed therein to receive the second lens group 20, and the first accommodating space 214 is in communication with the receiving space 614 through the first light inlet 2111 and the first light outlet 2113.

The first body 211 includes a first top surface 215 and a first bottom surface 216 that face away from each other. The first top surface 215 faces towards the cover plate 613. The first bottom surface 216 faces towards the bearing surface 6111 of the base plate 611. The movable barrel 21 may further include a first ball 217, and the first ball 217 is arranged on the first bottom surface 216. Specifically, a first groove 218 is defined on the first bottom surface 216, the first ball 217 is disposed in the first groove 218, and the first ball 217 disposed in the first groove 218 of the first bottom surface 216 abuts against the bottom of the movable barrel sliding rail 212.

Specifically, the first groove 218 matches the first ball 217 in shape, for example, the first ball 217 is spherical and has small movement resistance, the first groove 218 is a semicircular groove, and a diameter of the first ball 217 is equal to a diameter of the first groove 218, that is, half of the first ball 217 is received in the first groove 218, so that the first ball 217 is tightly coupled with the first groove 218, and the first ball 217, when moving, drives the first body 211 to move. The movable barrel sliding rail 212 may be a groove formed on the bearing surface 6111, and the extending direction of the groove is parallel to the x direction. Alternatively, the movable barrel sliding rail 212 may be a protrusion arranged on the bearing surface 6111, the extending direction of the protrusion is parallel to the x direction, and a groove matched with the first ball 217 is formed on a surface of the protrusion facing towards the first bottom surface 216 of the first body 211. In the present embodiment, the movable barrel sliding rail 212 is a groove formed on the bearing surface 6111, and the extending direction of the movable barrel sliding rail 212 is parallel to the x direction. After the movable barrel 21 is mounted in the receiving space 614, a part of the first ball 217 is located in the movable barrel sliding rail 212 and abuts against the bottom of the movable barrel sliding rail 212. Certainly, the first top surface 215 may also have a first ball 217 provided thereon, and correspondingly, the first top surface 215 also has a first groove 218 provided thereon. In this case, a first rail may be formed on the inner surface of the cover plate 613, and the first ball 217 located in the first groove 218 of the first top surface 215 abuts against the bottom of the first rail, where the structure of the first rail may be similar to that of the movable barrel sliding rail 212, which will not be elaborated here. The first top surface 215 has the first groove 218 defined thereon and the first ball 217 is provided correspondingly to the first groove 218, so that the first body 211, when moving, has a smaller moving resistance from the first top surface 215.

One or more first grooves 218 may be defined on the first bottom surface 216 or the first top surface 215. For example, one, two, three, four, or even more first grooves 218 are defined, and in the present embodiment, three first grooves 218 are defined. One or more first balls 217 may be provided on the first bottom surface 216 or the first top surface 215. In the present embodiment, the number of the first balls 217 is the same as that of the first grooves 218, and is three. The three first grooves 218 are spaced apart from each other on the first bottom surface 216 or the first top surface 215.

Hereinafter, the first groove 218, the first ball 217, and the movable barrel sliding rail 212 on the first bottom surface 216 will be described as an example, and reference is made to this example for the relation between the first groove 218, the first ball 217, and the first rail on the first top surface 215, which will not be described in detail. Specifically, on the first bottom surface 216, the number of the movable barrel sliding rails 212 may be determined according to the positions of the three first grooves 218, for example, if a connecting line of the three first grooves 218 is parallel to the optical axis of the zoom lens 100, then only one movable barrel sliding rail 212 needs to be provided; for another example, if the three first grooves 218 are divided into two groups (hereinafter referred to as a first group and a second group), the first group includes one first groove 218, the second group includes two first grooves 218, and the first groove 218 of the first group is not located on a connecting line of the two first grooves 218 of the second group (i.e., the three first grooves 218 may form a triangle, then two movable barrel sliding rails 212 are required to correspond to the first group and the second group, respectively. In the present embodiment, the three first grooves 218 are divided into a first group and a second group, the first group includes one first groove 218, the second group includes two first grooves 218, the first groove 218 of the first group corresponds to a first movable barrel sliding rail 2121, and the first grooves 218 of the second group correspond to a second movable barrel sliding rail 2122. Thus, the first ball 217 corresponding to the first groove 218 of the first group is movable (including sliding, rolling, or rolling while sliding) in the first movable barrel sliding rails 2121, the first balls 217 corresponding to the first grooves 218 of the second group are movable in the second movable barrel sliding rails 2122, the first ball 217 corresponding to the first group is limited in the first movable barrel sliding rail 2121, the first balls 217 corresponding to the second group are limited in the second movable barrel sliding rails 2122, and the three first balls 217 define a triangle (the center of the first ball 217 located in the first movable barrel sliding rail 2121 is a vertex of the triangle). On the premise of ensuring the stability of the movement, the number of the first balls 217 is minimized to reduce the movement resistance. Moreover, two opposite sides in the y direction of the outer wall of the first ball 217 corresponding to the first group are abutted by two opposite sides in the y direction of the inner wall of the first movable barrel sliding rail 2121, two opposite sides in the y direction of the outer wall of each of the two first balls 217 corresponding to the second group are abutted by two opposite sides in the y direction of the inner wall of the corresponding second movable barrel sliding rail 2122, and the three first balls 217 define a triangle, so that the first body 211 can be prevented from shaking or tilting in the y direction, and the imaging quality of the imaging module 1000 is not affected.

The first sliding block 213 is located on a surface of the first body 211 facing towards the inner side surface 6121 of the first side plate 6125 and/or the inner side surface 6121 of the second side plate 6126. For example, the first sliding block 213 is located on a surface of the first body 211 facing towards the inner side surface 6121 of the first side plate 6125; or, the first sliding block 213 is located on a surface of the first body 211 facing towards the inner side surface 6121 of the second side plate 6126; or the first sliding block 213 is located on the surface of the first body 211 facing towards the inner side surface 6121 of the first side plate 6125 and on the surface of the first body 211 facing towards the inner side surface 6121 of the second side plate 6126. **In** the present embodiment, the first sliding block 213 is located on the surface of the first body 211 facing towards the inner side surface 6121 of the first side plate 6125 and on the surface of the first body 211 facing towards the inner side surface 6121 of the second side plate 6126. The first sliding block 213 penetrates through the movable barrel mounting groove 6128a and then slides into the movable barrel sliding groove 6127a, so that the first sliding block 213 can be slidably disposed in the movable barrel sliding groove 6127a.

The number of the first sliding blocks 213 matches the number of the corresponding movable barrel mounting grooves 6128a. Specifically, the number of the first sliding blocks 213 located on the surface of the first body 211 facing towards the inner side surface 6121 of the first side plate 6125 is the same as the number of the movable barrel mounting grooves 6128a defined on the inner side surface 6121 of the first side plate 6125 and is two, and the two first sliding blocks 213 are in one-to-one correspondence with the two movable barrel mounting grooves 6128a; the number of the first sliding blocks 213 located on the surface of the first body 211 facing towards the inner side surface 6121 of the second side plate 6126 is the same as the number of the movable barrel mounting grooves 6128a defined in the inner side surface 6121 of the second side plate 6126 and is two, and the two first sliding blocks 213 are in one-to-one correspondence with the two movable barrel mounting grooves 6128a. In other embodiments, the number of the first sliding blocks 213 may alternatively be smaller than the number of the movable barrel mounting grooves 6128a, for example, the number of the first sliding blocks 213 positioned on the surface of the first body 211 facing towards the inner side surface 6121 of the first side plate 6125 is smaller than the number of the movable barrel mounting grooves 6128a defined on the inner side surface 6121 of the first side plate 6125, and the number of the first sliding blocks 213 positioned on the surface of the first body 211 facing towards the inner side surface 6121 of the second side plate 6126 is smaller than the number of the movable barrel mounting grooves 6128a defined on the inner side surface 6121 of the second side plate 6126. In addition, the length of the first sliding block 213 along the x direction is smaller than or equal to the length of the movable barrel mounting groove 6128a along the x direction, so that the first sliding blocks 213 can conveniently slide into the movable barrel sliding groove 6127a after penetrating through the movable barrel mounting groove 6128a.

The second lens group 20 is disposed in the first accommodating space 214. Specifically, the second lens group 20 can be mounted in the first accommodating space 214 by gluing, screwing, snapping, or other manners.

The movable frame 41 includes a second body 411 and second sliding blocks 413 disposed on two sides of the second body 411. The second body 411 has a light hole 4111 defined therein, the light hole 4111 corresponding to the filter 401 and the photosensitive element 402, the second body 411 has a second accommodating space 414 defined therein to accommodate the filter 401 and the photosensitive element 402, and the second accommodating space 414 is in communication with the receiving space 614 through the light hole 4111.

The second body 411 includes a second top surface 415 and a second bottom surface 416 that face away from each other, and the second top surface 415 faces towards the cover plate 613. The second bottom surface 416 faces towards the bearing surface 6111 of the base plate 611. The movable frame 41 may further include a second ball 417, and the second ball 417 is disposed on the second bottom surface 416. Specifically, the second bottom surface 416 has a second groove 418 and the second accommodating space 414 defined thereon, the second ball 417 can be disposed in the second groove 418, and the second ball 417 disposed in the second groove 418 of the second bottom surface 416 abuts against the bottom of the movable frame sliding rail 412.

Specifically, the second groove 418 matches the second ball 417 in shape, for example, the second ball 417 is spherical and has small movement resistance, the second groove 418 is a semicircular groove, and the diameter of the second ball 417 is equal to the diameter of the second groove 418, that is, half of the second ball 417 is located in the second groove 418. The second ball 417 is tightly coupled with the second groove 418, and the second ball 417, when moving, drives the second body 411 to move. The movable frame sliding rail 412 may be a groove defined on the bearing surface 6111 and the extending direction of the movable frame sliding rail 412 is parallel to the x direction; or the movable frame sliding rail 412 may be a protrusion disposed on the bearing surface 6111, the extending direction of the movable frame sliding rail 412 is parallel to the x direction, and a surface of the protrusion facing towards the second bottom surface 416 of the second body 411 has a groove defined thereon, the groove matching the second ball 417. In the present embodiment, the movable frame sliding rail 412 is a groove defined on the bearing surface 6111, and the extending direction of the movable frame sliding rail 412 is parallel to the x direction. After the movable frame 41 is mounted in the receiving space 614, a part of the second ball 417 is located in the movable frame sliding rail 412 and abuts against the bottom of the movable frame sliding rail 412. Certainly, the second top surface 415 may also have a second ball 417 provided thereon, and correspondingly, the second top surface 415 also have a second groove 418 provided thereon; in this case, the inner surface of the cover plate 613 may also have a second rail, and the second ball 417 located in the second groove 418 of the second top surface 415 abuts against the bottom of the second rail on the inner surface of the cover plate 613, where the structure of the second rail is similar to that of the movable frame sliding rail 412, which will not be elaborated here.

One or more second grooves 418 may be defined on the second bottom surface 416 or the second top surface 415. For example, one, two, three, four, or even more second grooves 418 are defined, and in the present embodiment, the number of the second grooves 418 is three. One or more second balls 417 may be defined on the second bottom surface 416 or the second top surface 415. In the present embodiment, the number of the second balls 417 is the same as the number of the second grooves 418 and is three. The three second grooves 418 are spaced apart from each other on the second bottom surface 416 or the second top surface 415.

Hereinafter, the second groove 418, the second ball 417, and the movable frame sliding rail 412 on the second bottom surface 416 will be described as an example, and reference can be made to this example for the relation between the second groove 418, the second ball 417 and the second rail on the second top surface 415, which will not be described in detail. Specifically, on second bottom surface 416, the three second grooves 418 are divided into a third group and a fourth group, where the third group includes one second groove 418, the fourth group includes two second grooves 418, the second groove 418 of the third group corresponds to a first movable frame sliding rail 4121, and the second grooves 418 of the fourth group correspond to second movable frame sliding rails 4122. In this way, the second ball 417 corresponding to the second groove 418 of the third group is movable (including sliding, rolling, or rolling while sliding) in the first movable frame sliding rail 4121, the second balls 417 corresponding to the second grooves 418 of the fourth group are movable in the second movable frame sliding rails 4122, the second ball 417 corresponding to the third group is limited in the first movable frame sliding rail 4121, the second balls 417 corresponding to the fourth group are limited in the second movable frame sliding rails 4122, and the three second balls 417 define a triangle. Moreover, two opposite sides in the y direction of the outer wall of the second ball 417 corresponding to the third group are abutted by two opposite sides in the y direction of the inner wall of the first movable frame sliding rail 4121, two opposite sides in the y direction of the outer wall of each of the two second ball 417 corresponding to the fourth group are abutted by two opposite sides in the y direction of the inner wall of the corresponding second movable frame sliding rail 4122, and the three second balls 417 define a triangle, so that the second body 411 can be prevented from shaking or tilting in the y direction, and the imaging quality of the imaging module 1000 is not affected.

The second sliding block 413 is located on a surface of the second body 411 facing towards the inner side surface 6121 of the first side plate 6125 and/or the inner side surface 6121 of the second side plate 6126. For example, the second sliding block 413 is located on a surface of the second body 411 facing towards the inner side surface 6121 of the first side plate 6125; alternatively, the second sliding block 413 is located on a surface of the second body 411 facing towards the inner side surface 6121 of the second side plate 6126; alternatively, the second sliding blocks 413 is located on the surface of the second body 411 facing towards the inner side surface 6121 of the first side plate 6125 and on the surface of the second body 411 facing towards the inner side surface 6121 of the second side plate 6126. In the present embodiment, the second sliding block 413 is located on the surface of the second body 411 facing towards the inner side surface 6121 of the first side plate 6125 and on the surface of the second body 411 facing towards the inner side surface 6121 of the second side plate 6126. The second sliding block 413 passes through the movable frame mounting groove 6128b and then slides into the movable frame sliding groove 6127b, so that the second sliding blocks 413 is slidably disposed in the movable frame sliding groove 6127b.

The number of the second sliding blocks 413 matches the number of the corresponding movable frame mounting grooves 6128b, which means that the number of the second sliding blocks 413 positioned on the surface of the second body 411 facing towards the inner side surface 6121 of the first side plate 6125 is the same as the number of the movable frame mounting grooves 6128b defined on the inner side surface 6121 of the first side plate 6125 and is two, and the two second sliding blocks 413 are in one-to-one correspondence with the two movable frame mounting grooves 6128b; and the number of the second sliding blocks 413 positioned on the surface of the second body 411 facing towards the inner side surface 6121 of the second side plate 6126 is the same as the number of the movable frame mounting grooves 6128b formed on the inner side surface 6121 of the second side plate 6126 and is two, and the two second sliding blocks 413 are in one-to-one correspondence with the two movable frame mounting grooves 6128b. Of course, in other embodiments, the number of the second sliding blocks 413 may be smaller than the number of the movable frame mounting grooves 6128b, for example, the number of the second sliding blocks 413 located on the surface of the second body 411 facing towards the inner side surface 6121 of the first side plate 6125 is smaller than the number of the movable frame mounting grooves 6128b defined on the inner side surface 6121 of the first side plate 6125, and the number of the second sliding blocks 413 located on the surface of the second body 411 facing towards the inner side surface 6121 of the second side plate 6126 is smaller than the number of the movable frame mounting grooves 6128b defined on the inner side surface 6121 of the second side plate 6126. In addition, the length of the second sliding block 413 in the x direction is smaller than or equal to the length of the movable frame mounting groove 6128b in the x direction, so that the second sliding block 413 can conveniently slide into the movable frame sliding groove 6127b after penetrating through the movable frame mounting groove 6128b.

The photosensitive element 402 and the filter 401 are disposed in the second accommodating space 414. Specifically, the photosensitive element 402 and the filter 401 are mounted in the second accommodating space 414 by gluing, screwing, snapping, or other manners, and the filter 401 is closer to the light hole 4111 than the photosensitive element 402.

The prism barrel 51 may be mounted on the bearing surface 6111 by gluing, screwing, snapping or other manners, and the prism barrel 51 and the base plate 611 may be integrally formed as one piece. The prism barrel 51 includes a light inlet through hole 512, a light outlet through hole 511, and a third accommodating space 513. The light inlet through hole 512 and the light outlet through hole 511 connect the third accommodating space 513 with the receiving space 614. The prism assembly 50 includes a prism 501, and the prism 501 is disposed in the third accommodating space 513. Specifically, the prism 501 may be mounted in the prism barrel 51 by gluing, snapping, or other manners. The prism 501 includes an incident surface 5011, a reflecting surface 5012, and an exit surface 5013, where the reflecting surface 5012 obliquely connects the incident surface 5011 with the exit surface 5013, and an included angle between the reflecting surface 5012 and the bearing surface 6111 may be 15 degrees, 30 degrees, 45 degrees, 60 degrees, 75 degrees, and so on, and in the present embodiment, the included angle between the reflecting surface 5012 and the bearing surface 6111 is 45 degrees. The incident surface 5011 faces towards the light inlet through hole 512, and the exit surface 5013 faces towards the light exit through hole 511. The prism 501 is configured to change an exit direction of the light entering from the light inlet through hole 512. The prism 501 may be a triple prism, and specifically, a cross section of the prism 501 is a right triangle, two right-angled sides of the right triangle are formed by the incident surface 5011 and the exit surface 5013, respectively, and a hypotenuse of the right triangle is formed by the reflecting surface 5012.

In some embodiments, the fixed barrel 11 may be mounted on the bearing surface 6111 by gluing, screwing, snapping, or other manners, and the fixed barrel 11 and the base plate 611 may be integrally formed as one piece. The fixed barrel 11 includes a light inlet hole 111, a light outlet hole 112, and a fourth accommodating cavity 113. The light inlet hole 111 faces towards the light exit through hole 511, and the light outlet hole 112 faces towards the first light inlet 2111 of the movable barrel 21. The light inlet hole 111 and the light outlet hole 112 connect the fourth accommodating cavity 113 with the receiving space 614. The first lens group 10 is located in the fourth accommodating cavity 113, and specifically, the first lens group 10 can be mounted in the fixed barrel 11 by gluing, screwing, snapping, or other manners. The first lens group 10 faces towards the exit surface 5013 of the prism 501.

In some embodiments, the mounting barrel 31 can be mounted on the bearing surface 6111 by gluing, screwing, snapping, or other manners, and the mounting barrel 31 and the base plate 611 may be integrally formed as one piece. The mounting barrel 31 includes a second light inlet 311, a second light outlet 312, and a fifth accommodating cavity 313. The second light inlet 311 faces towards the first light outlet 2113, and the second light outlet 312 faces towards the photosensitive element 402. The second light inlet 311 and the second light outlet 312 connect the fifth accommodating cavity 313 with the receiving space 614. The third lens group 30 is located in the fifth accommodating cavity 614, and specifically, the third lens group 30 is mounted in the mounting barrel 31 by gluing, screwing, snapping, or other manners. The third lens group 30 faces towards each of the second lens group 20 and the photosensitive element 402.

The imaging module 1000 according to the embodiment of the present disclosure further includes a driving part 70, the driving part 70 is disposed in the housing 60, the driving part 70 includes a first driving element 71 and a second driving element 72, the first driving element 71 is connected to the first body 211 of the movable barrel 21, and the second driving element 72 is connected to the second body 411 of the movable frame 41. The first driving element 71 is configured to drive the first body 211 to move so as to drive the second lens group 20 disposed in the first body 211 to move; and the second driving member 72 is configured to drive the second body 411 to move so as to drive the photosensitive element 402 and the filter 401 disposed in the second body 411 to move.

The first driving element 71 includes a first coil 711 and a first magnet 712.

One or more first coils 711 are included, for example, one, two, three, four, or even more first coils 711 are included, and in the present embodiment, only one first coil 711 is included. The first coil 711 is arranged on the first side plate 6125 or the second side plate 6126, and in the present embodiment, the first coil 711 is arranged on the first side plate 6125, and the first coil 711 can be mounted on the first side plate 6125 by gluing, screwing, snapping, or other manners. In other embodiments, two first coils 711 are included, and the two first coils 711 are disposed on the first side plate 6125 and the second side plate 6126, respectively, and face towards each other. The first coil 711 can be disposed at any position on the first side plate 6125, for example, the first coil 711 can be disposed on the inner side surface 6121 of the first side plate 6125 and located between the second lens group 20 and the third lens group 30; alternatively, the first coil 711 may be disposed on the inner side surface 6121 of the first side plate 6125 and between the first lens group 10 and the second lens group 20, and so on, which will not be elaborated herein. In the present embodiment, the first coil 711 is disposed on the inner surface 6121 of the first side plate 6125 and is located between the second lens group 20 and the third lens group 30. In other embodiments, the first coil 711 may be disposed on the fixed barrel 11 and face towards the first magnet 712.

The first magnet 712 is connected to the first body 211, and the first magnet 712 may be disposed at any position on the first body 211, for example, the first magnet 712 is disposed on the surface of the first body 211 facing towards the mounting barrel 31, or the first magnet 712 is disposed on the surface of the first body 211 facing towards the fixed barrel 11. In the present embodiment, the first magnet 712 is disposed on the surface of the first body 211 facing towards the mounting barrel 31. The first magnet 712 may be mounted on the first body 211 by screwing, gluing, snapping, or other manners. The first magnet 712 may be a metal having magnetism, for example, the first magnet 712 may be any one of iron, cobalt, and nickel, or the first magnet 712 may be an alloy composed of at least two of iron, cobalt, and nickel.

In other embodiments, the first magnet 712 is disposed on the first side plate 6125 or the second side plate 6126, and the first coil 711 is disposed on the first body 211. The first coil 711 may also be disposed at any position on the fixed barrel 11, for example, the first coil 711 is disposed on the surface of the fixed barrel 11 facing towards the first body 211, and in this case, the first magnet 712 may be disposed at any position on the first body 211, for example, the first magnet 712 is disposed on the surface of the first body 211 facing towards the fixed barrel 11. The mounting positions of the first coil 711 and the first magnet 712 may be interchanged, for example, the first magnet 712 is provided on the surface of the fixed barrel 11 facing towards the first body 211, and the first coil 711 is disposed on the surface of the first body 211 facing towards the fixed barrel 11.

The second driving element 72 includes a second coil 721 and a second magnet 722.

One or more second coils 721 may be included, for example, one, two, three, four, or even more second coils are included, and in the present embodiment, only second coil 721 is included. The second coil 721 is disposed on the first side plate 6125 or the second side plate 6126, and in the present embodiment, the second coil 721 is disposed on the first side plate 6125, and the second coil 721 may be mounted on the first side plate 6125 by gluing, screwing, snapping, or other manners. In other embodiments, two second coils 721 are included, and the two second coils 721 are disposed on the first side plate 6125 and the second side plate 6126, respectively, and face towards each other. The second coil 721 may be disposed at any position on the first side plate 6125, and in the present embodiment, the second coil 721 is disposed on the inner side surface 6121 of the first side plate 6125 and located between the movable frame 41 and a tail end of the housing 60. In other embodiments, the second coil 721 may be provided on the mounting barrel 31 and faces towards the second magnet 722.

The second magnet 722 is connected to the second body 411, and the second magnet 722 may be disposed at any position on the second body 411, for example, the second magnet 722 is disposed on the surface of the second body 411 facing towards the mounting barrel 31, or the second magnet 722 is disposed on the surface of the second body 411 facing away from the mounting barrel 31. In the present embodiment, the second magnet 722 is disposed on the surface of the second body 411 facing away from the mounting barrel 31. The second magnet 722 may be mounted on the second body 411 by screwing, gluing, snapping, or other manners. The second magnet 722 may be a metal having magnetism, for example, the second magnet 722 may be any one of iron, cobalt, and nickel, or the second magnet 722 may be an alloy composed of at least two of iron, cobalt, and nickel.

In other embodiments, the second magnet 722 is disposed on the first side plate 6125 or the second side plate 6126, and the second coil 721 is disposed on the second body 411. The second coil 721 may also be disposed at any position on the mounting barrel 31, for example, the second coil 721 is disposed on the surface of the mounting barrel 31 facing towards the second body 411, and in this case, the second magnet 722 may be disposed at any position on the second body 411, for example, the second magnet 722 is disposed on the surface of the second body 411 facing towards the mounting barrel 31. The mounting positions of the second magnet 722 and the second coil 721 may be interchanged, for example, the second magnet 722 is provided on the surface of the mounting barrel 31 facing towards the second body 411, and the second coil 721 is provided on the surface of the second body 411 facing towards the fixed barrel 11.

When the first coil 711 is energized, a lorentz force is generated between the first coil 711 and the first magnet 712, and since the first coil 711 is fixed to the first side plate 6125 or the second side plate 6126, the first magnet 712 is pushed by the lorentz force to move the first body 211 of the movable barrel 21 along the first movable barrel sliding rail 2121 and the second movable barrel sliding rail 2122. When the second coil 721 is energized, a lorentz force is generated between the second coil 721 and the second magnet 722, and the second magnet 722 is pushed by the lorentz force to move the second body 411 of the movable frame 41 along the first movable frame sliding rail 4121 and the second movable frame sliding rail 4122. The zoom lens 100 energizes the first coil 711 to control the second lens group 20 to move in the x direction, and energizes the second coil 721 to control the photosensitive element 402 to move in the x direction. In addition, the first coil 711 and the second coil 721 may be energized simultaneously, that is, the second lens group 20 and the photosensitive element 402 are moved simultaneously, to save moving and zoom time of the zoom lens 100. It should be noted that a current flowing into the first coil 711 and a current flowing into the second coil 721 have the same current direction, so that the second lens group 20 and the photosensitive element 402 move simultaneously on the optical axis o along the same moving direction. The current of the first coil 711 and the current of second coil 721 may have the same magnitude or different magnitudes. Of course, the first coil 711 and the second coil 721 may not be energized simultaneously, thereby preventing magnetic fields generated after the first coil 711 and the second coil 721 are energized from affecting each other and improving the moving accuracy.

During switching of the zoom lens 100 from the short focal length to the long focal length, the first coil 711 and the second coil 721 are simultaneously controlled to be energized, for example, the first coil 711 and the second coil 721 are controlled to be energized with a current in the first direction, so that the second lens group 20 moves towards the image side of the zoom lens 100, and the photosensitive element 402 and the filter 401 move towards the image side of the zoom lens 100, thereby realizing a switching of the zoom lens 100 from short focal length to long focal length. During switching of the zoom lens 100 from the long focal length to the short focal length, the first coil 711 and the second coil 721 are simultaneously controlled to be energized, for example, the first coil 711 and the second coil 721 are controlled to be energized with a current opposite to the first direction, so that the second lens moves towards the object side of the zoom lens 100, and the photosensitive element 402 and the filter 401 move towards the object side of the zoom lens 100, thereby realizing the switching of the zoom lens 100 from the long focal length to the short focal length.

During the automatic focusing of the zoom lens 100, the first coil 711 is controlled to be powered off so that the position of the second lens group 20 on the optical axis o remains unchanged. The moving direction and the moving amount of the photosensitive element 402 are determined by acquiring the definition of the image on the photosensitive element 402, and the current direction of the second coil 721 is controlled based on the moving direction, so that the photosensitive element 402 moves towards the object side or the image side of the zoom lens 100 until a maximum definition of the image on the photosensitive element 402 is obtained, and when the maximum definition of the image on the photosensitive element 402 is obtained, the second coil 721 is controlled to be powered off, thereby realizing the automatic focusing of the zoom lens 100.

According to the embodiment of the present disclosure, the first lens group 10 may include one or more lenses, the second lens group 20 may include one or more lenses, and the third lens group 30 may include one or more lenses. For example, the first lens group 10 includes one lens, the second lens group 20 includes one lens, and the third lens group 30 includes one lens; or the first lens group 10 includes one lens, the second lens group 20 includes two lenses, and the third lens group 30 includes three lenses. In the present embodiment, the first lens group 10 includes two lenses, which are a first lens 101 and a second lens 102; the second lens group 20 includes three lenses, which are a third lens 201, a fourth lens 202, and a fifth lens 203; and the third lens group 30 includes two lenses, which are a sixth lens 301 and a seventh lens 302.

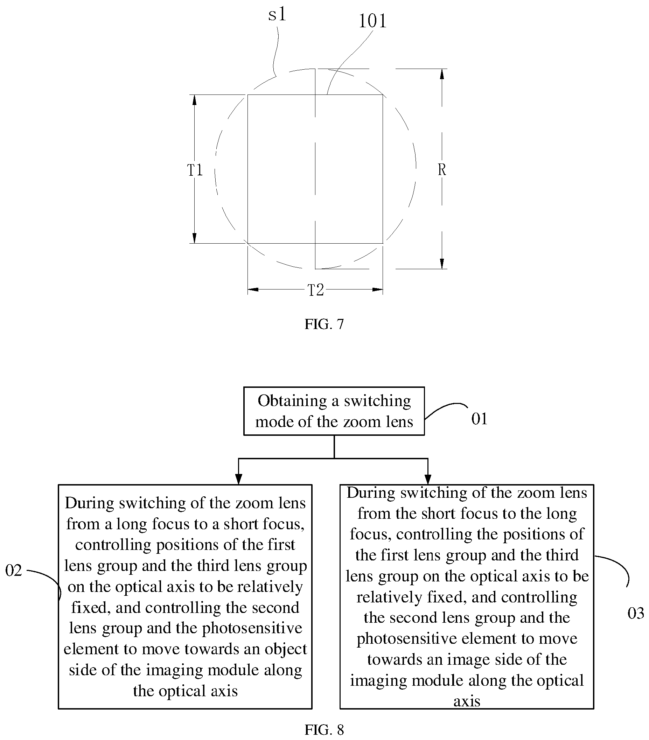

One or more lenses each may be a part of a revolving body, or have a part as a revolving body and a part as a part of a revolving body. In the present embodiment, each lens is a part of a revolving body. Taking the first lens 101 as an example, as shown in FIG. 7, the first lens 101 is first formed into a revolving lens s1 through a mold, a cross section of the revolving lens s1 cut by a plane perpendicular to the optical axis o of the zoom lens 100 is shaped as a circle having a diameter R, and then the edge of the revolving lens s1 is cut to form the first lens 101. A cross section of the first lens 101 cut by a plane perpendicular to the optical axis o is shaped as a rectangle having two sides of lengths T1 and T2, where T1/R∈[ 0.5, 1 ), T2/R∈[ 0.5, 1 ). For example, T1/R may be 0.5, 0.6, 0.7, 0.75, 0.8, 0.95, etc., and T2/R may be 0.55, 0.65, 0.7, 0.75, 0.85, 0.9, etc. It is understood that the specific ratios of T1/R and T2/R are determined according to the size of the internal space of the electronic device 2000 (shown in FIG. 11), the optical parameters of the zoom lens 100 (such as the size of the effective optical area of the first lens 101), and other factors. Alternatively, the first lens 101 is directly manufactured using a special mold, and a mold cavity of the mold is a part of a revolving body for which the specific ratios of T1/R and T2/R have been determined, thereby directly manufacturing the first lens 101. In this way, the first lens 101 is a part of the revolving lens s1, and is smaller in size than the whole revolving lens s1, so that the entire volume of the zoom lens 100 is reduced, which is advantageous for miniaturization of the electronic device 2000. Of course, other lenses (including at least one of the second lens 102, the third lens 201, the fourth lens 202, the fifth lens 203, the sixth lens 301, or the seventh lens 302) may be processed in the same manner. It should be noted that FIG. 7 is only used for illustrating the first lens 101 but not used for indicating the size of the first lens 101, and it should not be understood that the size of each lens is the same.

Referring to FIG. 1, FIG. 2 and FIG. 8, the imaging method according to the embodiment of the present disclosure is used to control any one of the above-mentioned imaging modules 1000, the imaging module 1000 includes the zoom lens 100 and the photosensitive element 402, the zoom lens 100 includes the first lens group 10, the second lens group 20, and the third lens group 30, the first lens group 10, the second lens group 20, the third lens group 30, and the photosensitive element 402 are arranged in a direction from the object side of the zoom lens 100 to the image side of the zoom lens 100, and the second lens group 20 and the photosensitive element 402 are both movable in a direction of the optical axis of the zoom lens 100. The imaging method includes the following steps.

At step 01, a switching mode of the zoom lens 100 is obtained.

At step 02, during switching of the zoom lens 100 from a long focal length to a short focal length, positions of the first lens group 10 and the third lens group 30 on the optical axis are controlled to be relatively fixed, and the second lens group 20 and the photosensitive element 402 are controlled to move towards an object side of the imaging module 1000 along the optical axis.

At step 03, during switching of the zoom lens 100 from the short focal length to the long focal length, positions of the first lens group 10 and the third lens group 30 on the optical axis are controlled to be relatively fixed, and the second lens group 20 and the photosensitive element 402 are controlled to move towards an image side of the imaging module 1000 along the optical axis.

Referring to FIG. 9, in some embodiments, the imaging method further includes the following steps.

At step 021, after the zoom lens 100 is switched from the short focal length to the long focal length, the photosensitive element 402 is controlled to move along the direction of the optical axis of the zoom lens 100 to realize automatic focusing.

At step 031, after the zoom lens 100 is switched from the long focal length to the short focal length, the photosensitive element 402 is controlled to move along the optical axis of the zoom lens 100 to realize automatic focusing.

In conjunction with FIG. 10, in some embodiments, the photosensitive element 402 obtains an image, and step 021 includes the following step.

At step 0211, after the zoom lens 100 is switched from the short focal length to the long focal length, a moving direction along the optical axis and a moving amount on the optical axis of the photosensitive element 402 are determined based on a definition of the image on the photosensitive element 402 to realize the automatic focusing.

The step 031 includes the following step.

At step 0311, after the zoom lens 100 is switched from the long focal length to the short focal length, a moving direction along the optical axis and the moving amount on the optical axis of the photosensitive element 402 are determined based on a definition of the image on the photosensitive element 402 to realize the automatic focusing.

Referring to FIG. 1, FIG. 2 and FIG. 11, the electronic device 2000 according to the embodiment of the present disclosure includes the imaging module 1000 and the casing 200 in any of the above embodiments, the imaging module 1000 includes the zoom lens 100 and the photosensitive element 402, and the zoom lens 100 includes the first lens group 10, the second lens group 20, and the third lens group 30. The first lens group 10, the second lens group 20, the third lens group 30, and the photosensitive element 402 are arranged in the direction from the object side of the zoom lens 100 to the image side of the zoom lens 100. Each of the second lens group 20 and the photosensitive element 402 is movable in the direction of the optical axis o of the zoom lens 100. During switching of the zoom lens 100 from the long focal length to the short focal length, positions of the first lens group 10 and the third lens group 30 on the optical axis are controlled to be relatively fixed, and the second lens group 20 and the photosensitive element 402 are controlled to move towards the object side of the imaging module 1000 along the optical axis; and during switching of the zoom lens 100 from the short focal length to the long focal length, the positions of the first lens group 10 and the third lens group 30 on the optical axis are controlled to be relatively fixed, and the second lens group 20 and the photosensitive element 402 are controlled to move towards the image side of the imaging module 1000 along the optical axis. The imaging module 1000 is disposed on the casing 200, and the casing 200 can effectively protect the imaging module 1000.

In the description of the specification, description with reference to the terms "one embodiment," "some embodiments," "an example," "a specific example," "some examples" or the like means that a particular feature, structure, material, or characteristic described in connection with the embodiment or example is included in at least one embodiment or example of the present disclosure. In this specification, the schematic representations of the terms used above are not necessarily intended to refer to the same embodiment or example. Furthermore, the particular features, structures, materials, or characteristics described may be combined in any suitable manner in any one or more embodiments or examples. Moreover, various embodiments or examples and features of various embodiments or examples described in this specification can be combined by those skilled in the art without contradicting each other.

Furthermore, the terms "first" and "second" are used for descriptive purposes only and should not be construed as indicating or implying relative importance or implicitly indicating the number of technical features indicated. Thus, a feature defined as "first" or "second" may explicitly or implicitly includes at least one of the features. In the description of the present disclosure, "a plurality of" means at least two, e.g., two, three, etc., unless explicitly specified otherwise.

## Claims

1. An imaging method, applied in controlling an imaging module (1000) comprising a zoom lens (100) and a photosensitive element (402), the zoom lens (100) comprising a first lens group (10), a second lens group (20), and a third lens group (30), the imaging method **characterized by** comprising:
during switching of the zoom lens (100) from a long focal length to a short focal length, controlling (S02) positions of the first lens group (10) and the third lens group (30) on an optical axis **(o)** of the zoom lens (100) to be fixed, and controlling the second lens group (20) and the photosensitive element (402) to synchronously move towards an object side of the imaging module (1000) along the optical axis **(o**), wherein a relative spacing between the second lens group (20) and the photosensitive element (402) is unchanged during the movement of the second lens group (20) and the photosensitive element (402) towards the object side of the imaging module (1000); and
during switching of the zoom lens (100) from the short focal length to the long focal length, controlling (S03) the positions of the first lens group (10) and the third lens group (30) on the optical axis **(o)** to be fixed, and controlling the second lens group (20) and the photosensitive element (402) to synchronously move towards an image side of the imaging module (1000) along the optical axis **(o**), wherein a relative spacing between the second lens group (20) and the photosensitive element (402) is unchanged during the movement of the second lens group (20) and the photosensitive element (402) towards the image side of the imaging module (1000), and
wherein the imaging method further comprises:
controlling (S021, S031), after the zoom lens (100) is switched from the short focal length to the long focal length or from the long focal length to the short focal length, the photosensitive element (402) to move along the optical axis **(o)** to enable automatic focusing,
said controlling (S021, S031), after the zoom lens (100) is switched from the short focal length to the long focal length or from the long focal length to the short focal length, the photosensitive element (402) to move along the optical axis **(o)** to enable the automatic focusing comprises:
after the zoom lens (100) is switched from the short focal length to the long focal length or from the long focal length to the short focal length, determining (S0211, S0311) a moving direction of the photosensitive element (402) along the optical axis **(o)** and a moving amount of the photosensitive element (402) on the optical axis **(o)** based on a definition of an image on the photosensitive element (402) to enable the automatic focusing.

2. An imaging module (1000), comprising:
a zoom lens (100) comprising a first lens group (10), a second lens group (20), and a third lens group (30); and
a photosensitive element (402),
wherein the first lens group (10), the second lens group (20), the third lens group (30), and the photosensitive element (402) are arranged in a direction from an object side of the zoom lens (100) to an image side of the zoom lens (100), and each of the second lens group (20) and the photosensitive element (402) is movable in a direction of an optical axis **(o)** of the zoom lens (100);
**characterized in that**,
during switching of the zoom lens (100) from a long focal length to a short focal length, positions of the first lens group (10) and the third lens group (30) on the optical axis **(o)** are fixed, and the second lens group (20) and the photosensitive element (402) synchronously move towards an object side of the imaging module (1000) along the optical axis **(o**), wherein a relative spacing between the second lens group (20) and the photosensitive element (402) is unchanged during the movement of the second lens group (20) and the photosensitive element (402) towards the object side of the imaging module (1000);
during switching of the zoom lens (100) from the short focal length to the long focal length, the positions of the first lens group (10) and the third lens group (30) on the optical axis **(o)** are fixed, and the second lens group (20) and the photosensitive element (402) synchronously move towards an image side of the imaging module (1000) along the optical axis **(o**), wherein a relative spacing between the second lens group (20) and the photosensitive element (402) is unchanged during the movement of the second lens group (20) and the photosensitive element (402) towards the image side of the imaging module (1000); and
after the zoom lens (100) is switched from the short focal length to the long focal length or from the long focal length to the short focal length, the photosensitive element (402) moves along the optical axis **(o)** to enable automatic focusing,
after the zoom lens (100) is switched from the short focal length to the long focal length or from the long focal length to the short focal length, a moving direction of the photosensitive element (402) along the optical axis **(o)** and a moving amount of the photosensitive element (402) on the optical axis **(o)** is determined by the photosensitive element (402) based on a definition of an image on the photosensitive element (402) to enable the automatic focusing.

3. The imaging module (1000) according to claim 2, wherein the zoom lens (100) further comprises a filter (401) disposed between the photosensitive element (402) and the third lens group (30), and the filter (401) is configured to move along with the photosensitive element (402) during switching of the zoom lens (100) between the short focal length and the long focal length and during automatic focusing of the zoom lens (100).

4. The imaging module (1000) according to claim 2, wherein the zoom lens (100) further comprises a prism assembly (50) comprising a prism (501), and the prism (501), the first lens group (10), the second lens group (20), the third lens group (30), and the photosensitive element (402) are arranged in a direction from the object side of the zoom lens (100) to the image side of the zoom lens (100).

5. The imaging module (1000) according to claim 2, further comprising:
a housing (60) comprising a base plate (611) and a side plate (612) arranged on the base plate (611), wherein the side plate (612) has sliding grooves (6127) formed thereon, the sliding grooves (6127) extending along the direction of the optical axis **(o);**
a movable barrel (21) disposed in the housing (60), wherein the second lens group (20) is arranged on the movable barrel (21), and the movable barrel (21) comprises a first body (211) and first sliding blocks (213) arranged on two sides of the first body (211); and
a movable frame (41) disposed in the housing (60), wherein the photosensitive element (402) is arranged on the movable frame (41), and the movable frame (41) comprises a second body (411) and second sliding blocks (413) arranged on two sides of the second body (411),
wherein the first sliding blocks (213) and the second sliding blocks (413) are movably installed in the sliding grooves (6127); and the first body (211) is configured to drive, when moving, the second lens group (20) to move along the optical axis **(o**), and the second body (411) is configured to drive, when moving, the photosensitive element (402) to move along the optical axis **(o).**

6. The imaging module (1000) according to claim 5, wherein the movable barrel (21) comprises a first ball (217) arranged on a first bottom surface (216) of the first body (211) facing towards the base plate (611); and
the movable frame (41) comprises a second ball (417) arranged on a second bottom surface (416) of the second body (411) facing towards the base plate (611).

7. The imaging module (1000) according to claim 5, further comprising:
a driving part (70) disposed in the housing (60), wherein the driving part (70) is connected to the first body (211), the driving part (70) is further connected to the second body (411), and the driving part (70) is configured to: drive the first body (211) to move so as to drive the second lens group (20) to move along the optical axis **(o),** and/or drive the second body (411) to move so as to drive the photosensitive element (402) to move along the optical axis **(o).**

8. The imaging module (1000) according to claim 2, wherein each of the first lens group (10), the second lens group (20), and the third lens group (30) comprises one or more lenses, and at least one of the one or more lenses is shaped as a part of a revolving body.

9. The imaging module (1000) according to claim 8, wherein the first lens group (10) comprises a first lens (101) and a second lens (102), the second lens group (20) comprises a third lens (201), a fourth lens (202), and a fifth lens (203), and the third lens group (30) comprises a sixth lens (301) and a seventh lens (302); and respective lenses of the first lens group (10), the second lens group (20), and the third lens group (30) satisfy following relations: -4 < f2/f1 < 0; 2 < f3/f1 < 5; 0 < f4/f1 < 4; -5 < f5/f1 < -1; 0 < f6/f1 < 4; and -2 < f7/fl < 0, or 0 < f7/f1 < 2, where f1 represents a focal length of the first lens (101), f2 represents a focal length of the second lens (102), f3 represents a focal length of the third lens (201), f4 represents a focal length of the fourth lens (202), f5 represents a focal length of the fifth lens (203), f6 represents a focal length of the sixth lens (301), and f7 represents a focal length of the seventh lens (302).

10. An electronic device (2000), comprising:
a casing (200),
**characterized in that** the electronic device further comprises the imaging module (1000) according to any one of claims 2 to 9, wherein the imaging module (1000) is mounted on the casing (200).

## Patentansprüche

1. Bildgebungsverfahren, das zur Steuerung eines Bildgebungsmoduls (1000) angewendet wird, umfassend eine Zoom-Linse (100) und ein lichtempfindliches Element (402), wobei die Zoom-Linse (100) eine erste Linsengruppe (10), eine zweite Linsengruppe (20) und eine dritte Linsengruppe (30) umfasst, wobei das Bildgebungsverfahren **dadurch gekennzeichnet ist, dass** es Folgendes umfasst: während des Umschaltens der Zoom-Linse (100) von einer langen Brennweite zu einer kurzen Brennweite Steuern (S02) von Positionen der ersten Linsengruppe (10) und der dritten Linsengruppe (30) auf einer optischen Achse **(o)** der Zoom-Linse (100), um fixiert zu werden, und Steuern der zweiten Linsengruppe (20) und des lichtempfindlichen Elements (402), um sich synchron in Richtung einer Objektseite des Bildgebungsmoduls (1000) entlang der optischen Achse **(o)** zu bewegen, wobei ein relativer Abstand zwischen der zweiten Linsengruppe (20) und dem lichtempfindlichen Element (402) während der Bewegung der zweiten Linsengruppe (20) und des lichtempfindlichen Elements (402) in Richtung der Objektseite des Bildgebungsmoduls (1000) unverändert bleibt; und
während des Umschaltens der Zoom-Linse (100) von der kurzen Brennweite zu der langen Brennweite Steuern (S03) der Positionen der ersten Linsengruppe (10) und der dritten Linsengruppe (30) auf der optischen Achse **(o),** um fixiert zu werden, und Steuern der zweiten Linsengruppe (20) und des lichtempfindlichen Elements (402), um sich synchron in Richtung einer Bildseite des Bildgebungsmoduls (1000) entlang der optischen Achse **(o)** zu bewegen, wobei ein relativer Abstand zwischen der zweiten Linsengruppe (20) und dem lichtempfindlichen Element (402) während der Bewegung der zweiten Linsengruppe (20) und des lichtempfindlichen Elements (402) in Richtung der Bildseite des Bildgebungsmoduls (1000) unverändert bleibt, und
wobei das Bildgebungsverfahren des Weiteren umfasst:
Steuern (S021, S031) des lichtempfindlichen Elements (402), so dass es sich entlang der optischen Achse **(o)** bewegt, um automatische Fokussierung zu ermöglichen, nachdem die Zoom-Linse (100) von der kurzen Brennweite zu der langen Brennweite oder von der langen Brennweite zu der kurzen Brennweite umgeschaltet worden ist,
wobei das Steuern (S021, S031) des lichtempfindlichen Elements (402), so dass es sich entlang der optischen Achse **(o)** bewegt, um die automatische Fokussierung zu ermöglichen, nachdem die Zoom-Linse (100) von der kurzen Brennweite zu der langen Brennweite oder von der langen Brennweite zu der kurzen Brennweite umgeschaltet worden ist, umfasst:
nachdem die Zoom-Linse (100) von der kurzen Brennweite zu der langen Brennweite oder von der langen Brennweite zu der kurzen Brennweite umgeschaltet worden ist, Bestimmen (S0211, S0311) einer Bewegungsrichtung des lichtempfindlichen Elements (402) entlang der optischen Achse **(o)** und eines Bewegungsbetrags des lichtempfindlichen Elements (402) auf der optischen Achse **(o)** basierend auf einer Definition eines Bildes auf dem lichtempfindlichen Element (402), um die automatische Fokussierung zu ermöglichen.

2. Bildgebungsmodul (1000), umfassend:
eine Zoom-Linse (100), umfassend eine erste Linsengruppe (10), eine zweite Linsengruppe (20) und eine dritte Linsengruppe (30); und
ein lichtempfindliches Element (402),
wobei die erste Linsengruppe (10), die zweite Linsengruppe (20), die dritte Linsengruppe (30) und das lichtempfindliche Element (402) in einer Richtung von einer Objektseite der Zoom-Linse (100) zu einer Bildseite der Zoom-Linse (100) vorgesehen sind, und jedes von der zweiten Linsengruppe (20) und dem lichtempfindlichen Element (402) in eine Richtung einer optischen Achse **(o)** der Zoom-Linse (100) beweglich ist;
**dadurch gekennzeichnet, dass**
während des Umschaltens der Zoom-Linse (100) von einer langen Brennweite zu einer kurzen Brennweite Positionen der ersten Linsengruppe (10) und der dritten Linsengruppe (30) auf der optischen Achse **(o)** fixiert sind, und die zweite Linsengruppe (20) und das lichtempfindliche Element (402) sich synchron in Richtung einer Objektseite des Bildgebungsmoduls (1000) entlang der optischen Achse **(o)** bewegen, wobei ein relativer Abstand zwischen der zweiten Linsengruppe (20) und dem lichtempfindlichen Element (402) während der Bewegung der zweiten Linsengruppe (20) und des lichtempfindlichen Elements (402) in Richtung der Objektseite des Bildgebungsmoduls (1000) unverändert bleibt;
während des Umschaltens der Zoom-Linse (100) von der kurzen Brennweite zu der langen Brennweite die Positionen der ersten Linsengruppe (10) und der dritten Linsengruppe (30) auf der optischen Achse **(o)** fixiert sind, und die zweite Linsengruppe (20) und das lichtempfindliche Element (402) sich synchron in Richtung einer Bildseite des Bildgebungsmoduls (1000) entlang der optischen Achse **(o)** bewegen, wobei ein relativer Abstand zwischen der zweiten Linsengruppe (20) und dem lichtempfindlichen Element (402) während der Bewegung der zweiten Linsengruppe (20) und des lichtempfindlichen Elements (402) in Richtung der Bildseite des Bildgebungsmoduls (1000) unverändert bleibt; und
nachdem die Zoom-Linse (100) von der kurzen Brennweite zu der langen Brennweite oder von der langen Brennweite zu der kurzen Brennweite umgeschaltet worden ist, das lichtempfindliche Element (402) sich entlang der optischen Achse **(o)** bewegt, um automatische Fokussierung zu ermöglichen,
nachdem die Zoom-Linse (100) von der kurzen Brennweite zu der langen Brennweite oder von der langen Brennweite zu der kurzen Brennweite umgeschaltet worden ist, eine Bewegungsrichtung des lichtempfindlichen Elements (402) entlang der optischen Achse **(o)** und ein Bewegungsbetrag des lichtempfindlichen Elements (402) auf der optischen Achse **(o)** durch das lichtempfindliche Element (402) basierend auf einer Definition eines Bildes auf dem lichtempfindlichen Element (402) bestimmt werden, um die automatische Fokussierung zu ermöglichen.

3. Bildgebungsmodul (1000) nach Anspruch 2, wobei die Zoom-Linse (100) des Weiteren ein Filter (401) umfasst, das zwischen dem lichtempfindlichen Element (402) und der dritten Linsengruppe (30) angeordnet ist, und das Filter (401) ausgestaltet ist, um sich zusammen mit dem lichtempfindlichen Element (402) während des Umschaltens der Zoom-Linse (100) zwischen der kurzen Brennweite und der langen Brennweite und während des automatischen Fokussierens der Zoom-Linse (100) zu bewegen.

4. Bildgebungsmodul (1000) nach Anspruch 2, wobei die Zoom-Linse (100) des Weiteren eine Prismenbaugruppe (50) umfasst, die ein Prisma (501) umfasst, und wobei das Prisma (501), die erste Linsengruppe (10), die zweite Linsengruppe (20), die dritte Linsengruppe (30) und das lichtempfindliche Element (402) in einer Richtung von der Objektseite der Zoom-Linse (100) zu der Bildseite der Zoom-Linse (100) vorgesehen sind.

5. Bildgebungsmodul (1000) nach Anspruch 2, des Weiteren umfassend:
ein Gehäuse (60), umfassend eine Basisplatte (611) und eine Seitenplatte (612), die auf der Basisplatte (611) vorgesehen ist, wobei die Seitenplatte (612) darin gebildete Gleitrillen (6127) aufweist, wobei sich die Gleitrillen (6127) entlang der Richtung der optischen Achse **(o)** erstrecken;
einen beweglichen Zylinder (21), der in dem Gehäuse (60) angeordnet ist, wobei die zweite Linsengruppe (20) auf dem beweglichen Zylinder (21) vorgesehen ist, und der bewegliche Zylinder (21) einen ersten Körper (211) und erste Gleitblöcke (213) umfasst, die auf zwei Seiten des ersten Körpers (211) vorgesehen sind; und
einen beweglichen Rahmen (41), der in dem Gehäuse (60) angeordnet ist, wobei das lichtempfindliche Element (402) auf dem beweglichen Rahmen (41) vorgesehen ist, und der bewegliche Rahmen (41) einen zweiten Körper (411) und zweite Gleitblöcke (413) umfasst, die auf zwei Seiten des zweiten Körpers (411) vorgesehen sind,
wobei die ersten Gleitblöcke (213) und die zweiten Gleitblöcke (413) beweglich in den Gleitrillen (6127) installiert sind; und der erste Körper (211) ausgestaltet ist, um, wenn er sich bewegt, die zweite Linsengruppe (20) anzutreiben, damit sie sich entlang der optischen Achse **(o)** bewegt, und der zweite Körper (411) ausgestaltet ist, um, wenn er sich bewegt, das lichtempfindliche Element (402) anzutreiben, damit es sich entlang der optischen Achse **(o)** bewegt.

6. Bildgebungsmodul (1000) nach Anspruch 5, wobei der bewegliche Zylinder (21) eine erste Kugel (217) umfasst, die auf einer ersten unteren Oberfläche (216) des ersten Körpers (211) vorgesehen ist, die in Richtung der Basisplatte (611) weist; und
der bewegliche Rahmen (41) eine zweite Kugel (417) umfasst, die auf einer zweiten unteren Oberfläche (416) des zweiten Körpers (411) vorgesehen ist, die in Richtung der Basisplatte (611) weist.

7. Bildgebungsmodul (1000) nach Anspruch 5, ferner umfassend:
ein Antriebsteil (70), das in dem Gehäuse (60) angeordnet ist, wobei das Antriebsteil (70) mit dem ersten Körper (211) verbunden ist, wobei das Antriebsteil (70) des Weiteren mit dem zweiten Körper (411) verbunden ist, und das Antriebsteil (70) ausgestaltet ist zum: Antreiben des ersten Körpers (211), so dass er sich so bewegt, dass die zweite Linsengruppe (20) angetrieben wird, um sich entlang der optischen Achse **(o)** zu bewegen, und/oder Antreiben des zweiten Körpers (411), so dass er sich so bewegt, dass das lichtempfindliche Element (402) angetrieben wird, um sich entlang der optischen Achse **(o)** zu bewegen.

8. Bildgebungsmodul (1000) nach Anspruch 2, wobei jede von der ersten Linsengruppe (10), der zweiten Linsengruppe (20) und der dritten Linsengruppe (30) eine oder mehrere Linsen umfasst, und mindestens eine der einen oder mehreren Linsen als Teil eines Umlaufkörpers geformt ist.

9. Bildgebungsmodul (1000) nach Anspruch 8, wobei die erste Linsengruppe (10) eine erste Linse (101) und eine zweite Linse (102) umfasst, die zweite Linsengruppe (20) eine dritte Linse (201), eine vierte Linse (202) und eine fünfte Linse (203) umfasst, und die dritte Linsengruppe (30) eine sechste Linse (301) und eine siebte Linse (302) umfasst; und jeweilige Linsen der ersten Linsengruppe (10), der zweiten Linsengruppe (20) und der dritten Linsengruppe (30) die folgenden Beziehungen erfüllen: -4 < f2/f1 < 0; 2 < f3/f1 < 5; 0 < f4/f1 < 4; -5 < f5/f1 < - 1; 0 < f6/f1 < 4 und -2 < f7/f1 < 0, oder 0 < f7/f1 < 2, wobei f1 eine Brennweite der ersten Linse (101) repräsentiert, f2 eine Brennweite der zweiten Linse (102) repräsentiert, f3 eine Brennweite der dritten Linse (201) repräsentiert, f4 eine Brennweite der vierten Linse (202) repräsentiert, f5 eine Brennweite der fünften Linse (203) repräsentiert, f6 eine Brennweite der sechsten Linse (301) repräsentiert, und f7 eine Brennweite der siebten Linse (302) repräsentiert.

10. Elektronische Vorrichtung (2000), umfassend:
eine Umhüllung (200),
**dadurch gekennzeichnet, dass** die elektronische Vorrichtung des Weiteren das Bildgebungsmodul (1000) gemäß einem der Ansprüche 2 bis 9 umfasst, wobei das Bildgebungsmodul (1000) auf der Umhüllung (200) montiert ist.

## Revendications

1. Procédé d'imagerie, appliqué à la commande d'un module d'imagerie (1000) comprenant un objectif zoom (100) et un élément photosensible (402), l'objectif zoom (100) comprenant un premier groupe de lentilles (10), un deuxième groupe de lentilles (20), et un troisième groupe de lentilles (30), le procédé d'imagerie étant **caractérisé en ce qu'**il comprend :
pendant le passage de l'objectif zoom (100) d'une focale longue vers une focale courte, la commande (S02) des positions du premier groupe de lentilles (10) et du troisième groupe de lentilles (30) sur un axe optique (o) de l'objectif zoom (100) de manière à les maintenir fixes, et la commande du deuxième groupe de lentilles (20) et de l'élément photosensible (402) de manière à ce qu'ils se déplacent de manière synchrone en direction d'un côté objet du module d'imagerie (1000) le long de l'axe optique (o), un espacement relatif entre le deuxième groupe de lentilles (20) et l'élément photosensible (402) demeurant inchangé pendant le déplacement du deuxième groupe de lentilles (20) et de l'élément photosensible (402) en direction du côté objet du module d'imagerie (1000) ; et
pendant le passage de l'objectif zoom (100) de la focale courte vers la focale longue, la commande (S03) des positions du premier groupe de lentilles (10) et du troisième groupe de lentilles (30) sur l'axe optique (o) de manière à les maintenir fixes, et la commande du deuxième groupe de lentilles (20) et de l'élément photosensible (402) de manière à ce qu'ils se déplacent de manière synchrone en direction d'un côté image du module d'imagerie (1000) le long de l'axe optique (o), un espacement relatif entre le deuxième groupe de lentilles (20) et l'élément photosensible (402) demeurant inchangé pendant le déplacement du deuxième groupe de lentilles (20) et de l'élément photosensible (402) en direction du côté image du module d'imagerie (1000), et
le procédé d'imagerie comprenant en outre :
la commande (S021, S031), après passage de l'objectif zoom (100) de la focale courte vers la focale longue ou de la focale longue vers la focale courte, de l'élément photosensible (402) de manière à ce qu'il se déplace le long de l'axe optique (o) pour permettre une mise au point automatique,
ladite commande (S021, S031), après passage de l'objectif zoom (100) de la focale courte vers la focale longue ou de la focale longue vers la focale courte, de l'élément photosensible (402) de manière à ce qu'il se déplace le long de l'axe optique (o) pour permettre la mise au point automatique comprenant :
après passage de l'objectif zoom (100) de la focale courte vers la focale longue ou de la focale longue vers la focale courte, la détermination (S0211, S0311) d'une direction de déplacement de l'élément photosensible (402) le long de l'axe optique (o) et d'une quantité de déplacement de l'élément photosensible (402) sur l'axe optique (o) sur la base d'une définition d'une image sur l'élément photosensible (402) pour permettre la mise au point automatique.

2. Module d'imagerie (1000), comprenant :
un objectif zoom (100) comprenant un premier groupe de lentilles (10), un deuxième groupe de lentilles (20), et un troisième groupe de lentilles (30) ; et
un élément photosensible (402),
le premier groupe de lentilles (10), le deuxième groupe de lentilles (20), le troisième groupe de lentilles (30), et l'élément photosensible (402) étant agencés dans une direction allant d'un côté objet de l'objectif zoom (100) à un côté image de l'objectif zoom (100), et le deuxième groupe de lentilles (20) et l'élément photosensible (402) étant chacun mobiles dans une direction d'un axe optique **(o)** de l'objectif zoom (100) ;
**caractérisé en ce que**,
pendant le passage de l'objectif zoom (100) d'une focale longue vers une focale courte, les positions du premier groupe de lentilles (10) et du troisième groupe de lentilles (30) sur l'axe optique (o) sont maintenues fixes, et le deuxième groupe de lentilles (20) et l'élément photosensible (402) se déplacent de manière synchrone en direction d'un côté objet du module d'imagerie (1000) le long de l'axe optique (o), un espacement relatif entre le deuxième groupe de lentilles (20) et l'élément photosensible (402) demeurant inchangé pendant le déplacement du deuxième groupe de lentilles (20) et de l'élément photosensible (402) en direction du côté objet du module d'imagerie (1000) ; et
pendant le passage de l'objectif zoom (100) de la focale courte vers la focale longue, les positions du premier groupe de lentilles (10) et du troisième groupe de lentilles (30) sur l'axe optique (o) sont maintenues fixes, et le deuxième groupe de lentilles (20) et l'élément photosensible (402) se déplacent de manière synchrone en direction d'un côté image du module d'imagerie (1000) le long de l'axe optique (o), un espacement relatif entre le deuxième groupe de lentilles (20) et l'élément photosensible (402) demeurant inchangé pendant le déplacement du deuxième groupe de lentilles (20) et de l'élément photosensible (402) en direction du côté image du module d'imagerie (1000) ; et
après passage de l'objectif zoom (100) de la focale courte vers la focale longue ou de la focale longue vers la focale courte, l'élément photosensible (402) se déplace le long de l'axe optique (o) pour permettre une mise au point automatique,
après passage de l'objectif zoom (100) de la focale courte vers la focale longue ou de la focale longue vers la focale courte, une direction de déplacement de l'élément photosensible (402) le long de l'axe optique (o) et une quantité de déplacement de l'élément photosensible (402) sur l'axe optique (o) sont déterminées par l'élément photosensible (402) sur la base d'une définition d'une image sur l'élément photosensible (402) pour permettre la mise au point automatique.

3. Module d'imagerie (1000) selon la revendication 2, dans lequel l'objectif zoom (100) comprend en outre un filtre (401) agencé entre l'élément photosensible (402) et le troisième groupe de lentilles (30), et le filtre (401) est configuré pour se déplacer conjointement avec l'élément photosensible (402) pendant le passage de l'objectif zoom (100) entre la focale courte et la focale longue et pendant une mise au point automatique de l'objectif zoom (100).

4. Module d'imagerie (1000) selon la revendication 2, dans lequel l'objectif zoom (100) comprend en outre un ensemble prisme (50) comprenant un prisme (501), et le prisme (501), le premier groupe de lentilles (10), le deuxième groupe de lentilles (20), le troisième groupe de lentilles (30), et l'élément photosensible (402) sont agencés dans une direction allant du côté objet de l'objectif zoom (100) au côté image de l'objectif zoom (100).

5. Module d'imagerie (1000) selon la revendication 2, comprenant en outre :
un boîtier (60) comprenant une plaque de base (611) et une plaque latérale (612) agencée sur la plaque de base (611), des rainures de coulissement (6127) étant ménagées sur la plaque latérale (612), les rainures de coulissement (6127) s'étendant suivant la direction de l'axe optique (o) ;
un barillet mobile (21) agencé dans le boîtier (60), le deuxième groupe de lentilles (20) étant agencé sur le barillet mobile (21), et le barillet mobile (21) comprenant un premier corps (211) et des premiers coulisseaux (213) agencés sur deux côtés du premier corps (211) ; et
un cadre mobile (41) agencé dans le boîtier (60), l'élément photosensible (402) étant agencé sur le cadre mobile (41), et le cadre mobile (41) comprenant un deuxième corps (411) et des deuxièmes coulisseaux (413) agencés sur deux côtés du deuxième corps (411),
dans lequel les premiers coulisseaux (213) et les deuxièmes coulisseaux (413) sont installés mobiles dans les rainures de coulissement (6127) ; et le premier corps (211) est configuré pour, lors de son déplacement, entraîner le déplacement du deuxième groupe de lentilles (20) le long de l'axe optique (o), et le deuxième corps (411) est configuré pour, lors de son déplacement, entraîner le déplacement de l'élément photosensible (402) le long de l'axe optique (o).

6. Module d'imagerie (1000) selon la revendication 5, dans lequel le barillet mobile (21) comprend une première bille (217) agencée sur une première surface inférieure (216) du premier corps (211) faisant face à la plaque de base (611) ; et
le cadre mobile (41) comprend une deuxième bille (417) agencée sur une deuxième surface inférieure (416) du deuxième corps (411) faisant face à la plaque de base (611) .

7. Module d'imagerie (1000) selon la revendication 5, comprenant en outre :
une pièce d'entraînement (70) agencée dans le boîtier (60), la pièce d'entraînement (70) étant reliée au premier corps (211), la pièce d'entraînement (70) étant reliée en outre au deuxième corps (411), et la pièce d'entraînement (70) étant configurée pour : entraîner le déplacement du premier corps (211) de manière à entraîner le déplacement du deuxième groupe de lentilles (20) le long de l'axe optique (o), et/ou entraîner le déplacement du deuxième corps (411) de manière à entraîner le déplacement de l'élément photosensible (402) le long de l'axe optique (o).

8. Module d'imagerie (1000) selon la revendication 2, dans lequel le premier groupe de lentilles (10), le deuxième groupe de lentilles (20), et le troisième groupe de lentilles (30) comprennent chacun une ou plusieurs lentilles, et au moins une des une ou plusieurs lentilles prend la forme d'une portion d'un corps de révolution.

9. Module d'imagerie (1000) selon la revendication 8, dans lequel le premier groupe de lentilles (10) comprend une première lentille (101) et une deuxième lentille (102), le deuxième groupe de lentilles (20) comprend une troisième lentille (201), une quatrième lentille (202), et une cinquième lentille (203), et le troisième groupe de lentilles (30) comprend une sixième lentille (301) et une septième lentille (302) ; et des lentilles respectives du premier groupe de lentilles (10), du deuxième groupe de lentilles (20), et du troisième groupe de lentilles (30) vérifient les relations suivantes : -4 < f2/f1 < 0 ; 2 < f3/f1 < 5 ; 0 < f4/f1 < 4 ; - 5 < f5/f1 < -1 ; 0 < f6/f1 < 4 ; et -2 < f7/f1 < 0, ou 0 < f7/f1 < 2, f1 représentant une focale de la première lentille (101), f2 représentant une focale de la deuxième lentille (102), f3 représentant une focale de la troisième lentille (201), f4 représentant une focale de la quatrième lentille (202), f5 représentant une focale de la cinquième lentille (203), f6 représentant une focale de la sixième lentille (301), et f7 représentant une focale de la septième lentille (302).

10. Dispositif électronique (2000), comprenant :
une coque (200),
le dispositif électronique étant **caractérisé en ce qu'**il comprend en outre le module d'imagerie (1000) selon l'une quelconque des revendications 2 à 9, le module d'imagerie (1000) étant monté sur la coque (200).
